# EUROPÄISCHE PATENTSCHRIFT

(11) **EP 3 352 558 B1**
(45) Veröffentlichungstag und Bekanntmachung des Hinweises auf die Patenterteilung: **13.02.2019**
(21) Anmeldenummer: 17817739.0
(22) Anmeldetag: 15.12.2017
(51) Int. Cl.: A01C 7/08, B65G 53/56, F16K 31/12, F16K 11/056

(54) **VERFAHREN UND EINRICHTUNG ZUR LENKUNG EINER KÖRNIGES GUT UMFASSENDEN STRÖMUNG AUF VERSCHIEDENE LEITUNGEN, SOWIE HIERMIT AUSGESTATTETE VORRICHTUNG ZUR VERTEILUNG KÖRNIGEN GUTS AUF EINE VERÄNDERLICHE ANZAHL VON LEITUNGEN**
METHOD AND DEVICE FOR GUIDING A FLOW CONTAINING GRANULAR MATERIAL INTO DIFFERENT CONDUITS, AND ARRANGEMENT CONTAINING SUCH DEVICE FOR THE DISTRIBUTION OF GRANULAR MATERIAL INTO A VARIABLE NUMBER OF CONDUITS
PROCÉDÉ ET DISPOSITIF POUR GUIDER UN COURANT AVEC MATÉRIEL GRANULAIRE À CONDUITS DIFFÉRENTS, ET APPAREIL AVEC UN TEL DISPOSITIF POUR LA DISTRIBUTION DE MATÉRIEL GRANULAIRE À UN NOMBRE VARIABLE DES CONDUITS

(30) Priorität: 16.12.2016 DE 102016015034
(43) Veröffentlichungstag der Anmeldung: 01.08.2018
(73) Patentinhaber: Funck, Gerald, 74193 Schwaigern-Stetten (DE)
(72) Erfinder: Funck, Gerald, 74193 Schwaigern-Stetten (DE)
(74) Vertreter: Dennemeyer & Associates S.A.
(86) Internationale Anmeldenummer: PCT/EP2017/082996
(87) Internationale Veröffentlichungsnummer: WO 2018/109157

(56) Entgegenhaltungen:
- DE-A1- 19 918 337
- DE-A1-102008 033 293
- DE-A1-102014 108 769
- DE-B- 1 137 679
- DE-B- 1 180 315

## Beschreibung

### Gebiet der Erfindung

Die vorliegende Erfindung betrifft ein Verfahren zur Lenkung einer körniges Gut umfassenden Strömung auf verschiedene Leitungen, insbesondere Saatleitungen, gemäß dem Oberbegriff des Anspruchs 1, eine kurz als Schaltelement bezeichnete Einrichtung zur Lenkung einer körniges Gut umfassenden Strömung auf verschiedene Leitungen, insbesondere Saatleitungen, gemäß dem Oberbegriff des Anspruchs 6, sowie eine Vorrichtung zur Verteilung körnigen Guts auf eine veränderliche Anzahl von zu jeweils mindestens einem Ausbringungsorgan führenden Leitungen, insbesondere Saatleitungen, gemäß dem Oberbegriff des Anspruchs 13.

Insbesondere betrifft die Erfindung ein Verfahren und eine Einrichtung zur Lenkung einer körniges Gut umfassenden Strömung wahlweise durch mindestens eine erste Leitung oder bedarfsweise durch mindestens eine zweite Leitung, beispielsweise zum Wechseln der Durchströmung von Leitungen bei einer körniges Gut umfassenden Strömung, beispielsweise zur Strömungsteilung und/oder Umlenkung.

Eine effektive Ressourcenschonung wird in der Landwirtschaft durch eine möglichst exakte Dosierung und ortsgenaue Zuordnung auf oder in den Boden während der Ausbringung erhalten. Dies trifft sowohl für flüssig, als auch für fest ausgebrachte Stoffe zu. Beispielsweise kann hierdurch bei der Ausbringung von Saatgut eine optimale Standraumzuteilung der einzelnen Pflanzen, einhergehend mit einem geringen Saatgutverbrauch erzielt werden.

Beispielsweise bei der auch als Drillsaat bezeichneten Reihensaat, ebenso wie bei der Mulch- und der Direktsaat ist es hierzu erforderlich, Samenkörner zu gleichen Anteilen und in gleichbleibender Menge mehreren parallel verlaufenden Särinnen oder -streifen zuzuführen. Die gleichbleibende Menge bezieht sich hierbei auf einen im Wesentlichen gleichbleibenden Quotienten von den einzelnen Särinnen zugeführten und darin abgelegten Samenkörnern über der Zeit.

Von Feldspritzen mit einer Vielzahl an quer zur Fahrtrichtung einer landwirtschaftlichen Maschine auskragenden Auslegern angeordneten Einzeldüsen ist bekannt, einzelne oder Gruppen von Düsen individuell bedarfsweise zu- und abzuschalten, beispielsweise wenn diese über einen bereits behandelten Bodenabschnitt ragen, oder der momentan unter diesen befindliche Bodenabschnitt keine Behandlung erfahren soll.

Für die Verteilung von im Wesentlichen Körner umfassenden körnigen Guts, beispielsweise Saatgut, auf mehrere Ausbringungsorgane oder -einrichtungen, wie etwa Säscharen, ist ebenso eine bedarfsweise Zu- und Abschaltung einzelner Ausbringungsorgane erwünscht, beispielsweise um Fahrgassen freizuhalten oder um bei Überschneidungen mit Bodenabschnitten, in denen bereits beispielsweise eine Saatgutablage erfolgt ist, eine unwirtschaftliche doppelte Kornablage zu vermeiden.

Zur Verteilung körnigen Guts auf mehrere Ausbringungsorgane oder -einrichtungen, wie beispielsweise Säscharen ist bekannt, aus einem einen Vorrat beherbergenden Reservoir Körner umfassendes körniges Gut beispielsweise mittels eines Zellenrads und/oder einer VenturiDüse einem Luftstrom zuzudosieren. Der so erhaltene Mischstrom aus dem als Trägermedium dienenden Luftstrom und dem zudosierten körnigen Gut wird anschließend einem Verteiler zugeführt. Von dem Verteiler gehen mehrere Verteilerleitungen ab. Jede dieser Verteilerleitungen mündet an einem von mehreren beispielsweise an quer zur Fahrtrichtung einer landwirtschaftlichen Maschine auskragenden Auslegern angeordneten Ausbringungsorganen, beispielsweise Säscharen.

### Stand der Technik

Durch DE 44 11 240 C2 ist bekannt, schwenkbare Klappen oder vertikal bewegliche Schieber in einem Verteiler vorzusehen, um einzelne, vom Verteiler abgehende Verteilerleitungen abzusperren. Die Klappen oder Schieber schließen dabei in Offenstellung bündig mit einer zu einer Verteilerleitung führenden Kanal bildenden Wandung ab, ohne in den Verteilerraum zu ragen. Durch die Absperrung im Verteiler verändert sich die Konzentration des in die offen verbleibenden Verteilerleitungen abgegebenen körnigen Guts. Mit der Abschaltung kann somit weder eine gleichbleibende Mengenabgabe, noch eine gleichmäßige Verteilung auf die offen verbleibenden Leitungen sichergestellt werden.

Nachteilig hieran ist darüber hinaus, dass es im Zulauf zur abgesperrten Leitung zu einem Stau kommen kann, wodurch die verstellbaren Klappen oder Schieber blockiert werden können. Ferner benötigen die verstellbaren Klappen oder Schieber aufwändige Dreh- (Klappen) oder Linearantriebe (Schieber), welche bei einer Blockade einzelner Klappen oder Schieber versagen und vollständig ausfallen können. Darüber hinaus wird das für eine Leitung vorgesehene körnige Gut nach deren erfolgter Absperrung und darauffolgender gegebenenfalls stattfindender Aufstauung den offen verbleibenden Leitungen zugeführt. Dadurch wird bei der Absperrung einer oder mehrerer Leitungen den offen verbleibenden Leitungen eine erhöhte Menge körnigen Guts zugeführt, einhergehend beispielsweise mit einer nicht mehr optimalen Standraumzuordnung. Darüber hinaus kann so kein körniges Gut, wie etwa Saatgut, durch Absperrung einer oder mehrerer momentan nicht benötigter Leitungen eingespart bleiben. Der mitgeführte Vorrat schrumpft gleichermaßen schnell weiter, wie wenn ohne Absperrung weitergefahren wird.

Durch DE 102 10 010 A1 ist bekannt, eine Absperrung in oder am Ende oder am Anfang der von einem Verteiler abgehenden Verteilerleitungen, oder im Verteiler vorzusehen. Eine Absperrung im Verteiler sieht vor, gleichzeitig mehrere von einem Verteiler abgehende Verteilerleitungen abzusperren, indem ein Schieber in Richtung parallel zur Einströmrichtung des Mischstroms aus dem als Trägermedium dienenden Luftstrom und dem zudosierten körnigen Gut in einen vom Verteiler beherbergten Verteilerraum eingeschoben wird. Dieser Schieber ist mit radialem Abstand zu den vom Verteilerraum abgehenden Anschlüssen der Verteilerleitungen angeordnet. Der Verteiler weist hierzu an den Anschlüssen der Verteilerleitungen zum Verteilerraum einen größeren Innendurchmesser auf, als an in einem Eintrittsquerschnitt des Mischstroms in den Verteilerraum, wobei um den Schieber herum ein Ringraum verbleibt, von dem aus die Anschlüsse der Verteilerleitungen radial zur Einströmrichtung des Mischstroms gesehen nach außen abgehen. Der Schieber weist die Form eines zum Ringraum konzentrischen Zylinders auf. Der Schieber wird durch einen Verstellmechanismus betätigt. Der Verstellmechanismus umfasst einen von der Außenwand des Schiebers in einer korrespondierenden schlitzartigen und in Verstellrichtung des Schiebers verlaufenden Öffnung verlaufenden Arm und einen über ein Kippgelenk befestigten Schwenkhebel. Ein zweiter Hebelarm des Schwenkhebels ist mit dem Arm des Schiebers verbunden. Durch Druck auf den Schwenkhebel wird der Schieber von einer abgesenkten in eine Absperrposition überführt.

Nachteilig hieran ist, dass das für die abgesperrten Leitungen ursprünglich zudosierte körnige Gut zusätzlich in die offen verbleibenden Leitungen eingebracht wird. Damit können zwar Leitungen abgeschaltet, jedoch kein körniges Gut mit der Abschaltung eingespart werden. Ein zusätzlicher Nachteil ist der - weil viele bewegliche Teile umfassend - komplizierte und - weil offen liegend - gegenüber Verschmutzungen anfällige Verstellmechanismus.

Durch DE 196 13 785 C2 ist eine Verteilmaschine bekannt, bei der Sperrmittel vorgesehen sind, um die Abgabe körnigen Guts an einzelne oder Gruppen von an vom Verteiler abgehende Verteilerleitungen angeschlossene Ausbringungsorgane bedarfsweise zu unterbinden. Körniges Gut, das einer abgesperrten Verteilerleitung zugeführt wird, wird über einen Ableitstutzen abgeführt. Der Ableitstutzen ist mit einer Rückführungsleitung verbunden, die das körnige Gut wieder dem Reservoir zuführt oder dem Mischstrom wieder beimengt. Die Sperrmittel werden über separate Verstellantriebe, beispielsweise elektromagnetisch arbeitende Verstellantriebe, betätigt.

Nachteilig ist der hohe konstruktive Aufwand für die erforderlichen Verstellantriebe sowie deren Verbindung mit den Sperrmitteln, einhergehend mit einem hohen Ausfallrisiko.

Durch DE 10 2009 031 066 A1 ist ein Verteiler mit mehreren von diesem abgehenden Verteilerleitungen bekannt. Die Verteilerleitungen sind auf halber Höhe gleichmäßig über den Umfang verteilt an einen an seinen gegenüberliegenden Stirnseiten offenen, hohlzylinderförmigen Außenring angeschlossen. Der Außenring ist konzentrisch zu einem hohlzylinderförmigen Verteilergehäuse mit einer Eintrittsöffnung entlang dessen Hohlzylinderachse verschiebbar angeordnet. In einer die gegenüberliegenden Stirnseiten des Verteilergehäuses miteinander verbindenden Gehäusewandung sind in zwei entlang der Hohlzylinderachse versetzten, normal zur Hohlzylinderachse und parallel zueinander liegenden Abgabequerschnitten über den Umfang verteilt Abgabefenster in Übereinstimmung mit den Umfangspositionen der Verteilerleitungen am Außenring angeordnet. In einem ersten Abgabequerschnitt sind dabei eine der Anzahl der Verteilerleitungen entsprechende Zahl von Abgabefenstern angeordnet. In einem zweiten Abgabequerschnitt ist eine geringere Zahl von Abgabefenstern angeordnet. Durch eine Verschiebung des Außenrings entlang der Hohlzylinderachse werden entweder die Abgabefenster des ersten Abgabequerschnitts in Übereinstimmung mit den an den Außenring angeschlossenen Verteilerleitungen gebracht, wobei jeder Verteilerleitung ein Abgabefenster zugeordnet ist und damit eine Abgabe an alle Verteilerleitungen stattfindet, oder die Abgabefenster des zweiten Abgabequerschnitts in Übereinstimmung mit nur einem Teil den an den Außenring angeschlossenen Verteilerleitungen gebracht, wobei nicht jeder Verteilerleitung ein Abgabefenster zugeordnet wird und somit eine Abgabe nur an diejenigen Verteilerleitungen erfolgt, welchen im zweiten Abgabequerschnitt ein Abgabefenster zugeordnet ist.

Nachteilig hieran ist zum einen, dass sämtliches zudosiertes körniges Gut in die offen verbleibenden Leitungen eingebracht wird. Damit können zwar Leitungen abgeschaltet, jedoch kein körniges Gut mit der Abschaltung eingespart werden. Zum anderen nachteilig ist, dass ein Verstellmechanismus benötigt wird, welcher die Axialverschiebung des Außenrings sowohl besorgt, als auch in der gewählten Stellung gegen Erschütterungen und Schwerkrafteinflüsse einhält. Aufgrund des hohen konstruktiven Aufwands für den Verstellmechanismus geht damit ein hohes Ausfallrisiko einher.

Dem Stand der Technik gemein ist der Bedarf aufwändiger Antriebe und Mechanismen, um die notwendigen Verstellungen der Absperrmittel bei der Zu- und Abschaltung einzelner Leitungen vorzunehmen. Dies hat eine mit steigender Anzahl beweglicher Bauteile zunehmende Ausfallwahrscheinlichkeit einhergehend mit einer geringeren Betriebssicherheit zur Folge. Die Veröffentlichungen DE 10 2014 108 769 A1 und DE 1 137 679 offenbaren Verfahren und Einrichtungen gemäß den Oberbegriffen der Ansprüche 1 und 5.

### Aufgabe

Eine Aufgabe der Erfindung ist die Angabe eines die Nachteile des Standes der Technik ausräumenden Verfahrens zur Lenkung beziehungsweise Umlenkung einer körniges Gut umfassenden Strömung auf verschiedene Leitungen, insbesondere Saatleitungen, sowie die Bereitstellung einer zur Durchführung eines solchen Verfahrens geeigneten, auch als ein Schaltelement bezeichenbaren Einrichtung. Insbesondere ist es eine Aufgabe der Erfindung, ein Verfahren und eine Einrichtung zur Lenkung einer körniges Gut umfassenden Strömung wahlweise durch mindestens eine erste Leitung sowie bedarfsweise durch mindestens eine zweite Leitung zu schaffen, sowie eine Vorrichtung zur Verteilung von im Wesentlichen Körner umfassenden körnigen Guts auf eine veränderliche Zahl von Leitungen anzugeben, welche mit möglichst wenig beweglichen Teilen ohne den beim Stand der Technik erforderlichen hohen konstruktiven Aufwand, insbesondere ohne dessen Vielzahl beweglicher und dadurch nur eingeschränkt langzeitbetriebssicherer Teile auskommen.

### Lösung

Die obige Aufgabe wird jeweils gelöst durch die Merkmale der unabhängigen Ansprüche. Weitere vorteilhafte Ausgestaltungen werden durch die Unteransprüche beschrieben.

Es ist ersichtlich, dass die Erfindung durch ein auch als Strömungsweiche bezeichenbares Schaltelement für eine kurz als Strömung bezeichnete, körniges Gut umfassende Strömung verwirklicht sein kann, welches einen von einem Gehäuse umschlossenen Strömungsraum mit einer Einlassöffnung und mindestens zwei Auslassöffnungen sowie ein in dem Strömungsraum zumindest zum Teil beweglich beherbergtes Strömungselement umfasst.

Zumindest an jede der Auslassöffnungen ist jeweils mindestens eine Leitung angeschlossen.

Dieses Schaltelement bildet somit eine Einrichtung zur Lenkung einer körniges Gut umfassenden Strömung wahlweise durch mindestens eine erste Leitung sowie bedarfsweise durch mindestens eine zweite Leitung.

Die Einlass- und die Auslassöffnungen münden vorteilhaft auf gegenüberliegenden Seiten in den Strömungsraum. Das Strömungselement kann zwischen einer der Anzahl der Auslassöffnungen entsprechenden Zahl von Schaltpositionen beweglich angeordnet sein. In jeder der Schaltpositionen sperrt das Strömungselement eine der Auslassöffnungen ab. Das Strömungselement bedeckt hierbei die Mündung der entsprechenden Auslassöffnung in den Strömungsraum. Es trennt damit die von ihm bedeckte Auslassöffnung von der Strömung ab. Genauer trennt es damit die von der von ihm bedeckten Mündung vom Strömungsraum abgehende Auslassöffnung von der Strömung ab. In den Schaltpositionen weist das Strömungselement unter Einwirkung des auf es einwirkenden Staudrucks der durch die Einlassöffnung in den Strömungsraum einströmenden und durch die mindestens eine Auslassöffnung aus dem Strömungsraum wieder austretenden Strömung jeweils eine stabile Lage auf.

Die Einnahme und die Einhaltung der stabilen Lagen wird dadurch begünstigt, dass das Strömungselement mit geringfügigem Verlassen einer stabilen Lage zusätzlich zum auf es einwirkenden Staudruck eine durch die dann stattfindende dynamische Umströmung hervorgerufene Kraft erfährt, welche es zusätzlich zurück in die vormals verlassene stabile Lage oder bei Überschreitung einer instabilen Zwischenposition in eine andere als die vormals verlassene stabile Lage drängt.

Durch eine Krafteinwirkung in einer von der Strömungsrichtung verschiedenen Richtung überwindet das Strömungselement den auf es einwirkenden Staudruck und verlässt eine momentan eingenommene erste Schaltposition, um anschließend durch den weiterhin auf es einwirkenden Staudruck erneut eine stabile Lage in einer von der ersten Schaltposition verschiedenen zweiten Schaltposition einzunehmen.

Die Krafteinwirkung erfolgt vorteilhaft berührungslos. Bei einer Krafteinwirkung durch Berührung besteht die Gefahr eines Verschmutzens einhergehend mit einer Beeinflussung der stabilen Lagen in den Schaltpositionen. Dies hätte eine Verringerung der Betriebssicherheit zur Folge.

Die Krafteinwirkung erfolgt erfindungsgemäß durch einen Druckstoß.

Beispielsweise kann der Druckstoß in Richtung quer zur Strömungsrichtung und/oder quer zur durch den Staudruck in einer stabilen Lage ausgeübten Kraftrichtung erfolgen.

Denkbar ist außerdem alternativ oder zusätzlich ein Druckstoß entgegen der Strömungsrichtung. Eine Kombination kann beispielsweise bei mehr als zwei Schaltpositionen vorteilhaft sein, etwa um das Strömungselement in eine Schaltposition zu bringen, in der eine bestimmte Auslassöffnung abgesperrt beziehungsweise von der Strömung getrennt ist.

Hierbei können während eines Umschaltvorgangs, bei dem das Strömungselement von einer ersten Schaltposition in eine zweite Schaltposition überführt wird, beispielsweise bei mehr als zwei Auslassöffnungen von den offen zu verbleiben beabsichtigten Auslassöffnungen, beispielsweise von deren Mündungen zum Strömungsraum ausgehend, anhaltend oder impulsartig Druckstöße ausgehen, welche das Strömungselement daran hindern, die Mündungen der offen zu verbleiben beabsichtigten Auslassöffnungen abzudecken. Durch die während des Umschaltvorgangs von den offen zu verbleiben beabsichtigten Auslassöffnungen ausgehend auf das Strömungselement einwirkenden dauerhaften oder impulsartigen Druckstöße wird das Strömungselement in die gewünschte, einzig nicht durch Druckstöße gestörte Schaltposition wechseln beziehungsweise fallen.

Der Begriff Stoß steht hier stellvertretend für eine im Vergleich zur Anhaltenden Dauer der Strömung kurze Einwirkungsdauer von beispielsweise wenigen tausendstel Sekunden bis hin zu mehreren Sekunden.

Alternativ kann die Krafteinwirkung magnetisch, insbesondere elektromagnetisch erfolgen.

Denkbar ist außerdem eine elektrostatische Erzeugung der Krafteinwirkung.

Darüber hinaus sind Kombinationen der verschiedenartigen Erzeugungen der Krafteinwirkung denkbar.

Als Strömungselement kommt beispielsweise eine frei im Strömungsraum beweglich beherbergte Kugel in Frage. Diese ist ohne gesonderte Dichtmittel ohne weiteres in der Lage, kreisrunde Mündungen von Auslassöffnungen abzudichten und damit eine von der Mündung abgehende Auslassöffnung vom Strömungsraum und damit von der körniges Gut umfassenden Strömung beziehungsweise zumindest von deren körnigem Gut abzutrennen.

Der Strömungsraum kann mit dem Strömungselement korrespondierende Querschnittsabmessungen aufweisen. Im Falle einer Kugel als Strömungselement haben die Querschnitte der Mündungen vom Strömungsraum hin zu den Ein- und Auslassöffnungen vorteilhaft einen konvergenten oder einen divergenten oder einen konvergent-divergenten Verlauf mit einem jüngsten Querschnitt kleiner als die Kugel. Der Strömungsraum selbst weist vorteilhaft einen derart gestalteten Querschnitt auf, dass die Kugel in ihm zwischen den Schaltpositionen frei beweglich ist.

Die Kugel kann zur Stabilisierung deren Lage und/oder des Schaltvorgangs einen stromauf, i.e. entgegen der Strömungsrichtung abstehenden Fortsatz aufweisen, der in die Mündung der Einlassöffnung in den Strömungsraum reicht.

Als Strömungselement kommen alternativ eine oder mehrere Klappen in Frage. Jede Klappe ist zwischen den Mündungen von zwei Auslassöffnungen in den Strömungsraum angeordnet. Die Anzahl der Klappen entspricht dabei der Zahl der Auslassöffnungen abzüglich eins. Die Klappen sind zwischen den Mündungen gelenkig, an deren gegenüberliegenden Enden frei beweglich angeordnet.

Die Erfindung ermöglicht ein berührungsfreies Hin- und Herschalten zwischen mindestens zwei Leitungen, beispielsweise um eine Körner umfassende Strömung einer zu einer Säschar führenden Leitung zuzuführen sowie bedarfsweise die zu der Säschar führende Leitung von der Strömung abzuschneiden, indem diese einer anderen Leitung zugeführt wird.

Vorteilhaft werden das erfindungsgemäße Verfahren und die ein als Strömungsweiche bezeichenbares Schaltelement bildende erfindungsgemäße Einrichtung zur Lenkung einer körniges Gut umfassenden Strömung wahlweise durch mindestens eine erste Leitung sowie bedarfsweise durch mindestens eine zweite Leitung in Verbindung mit einer Vorrichtung zur Verteilung körnigen Guts auf eine veränderliche Anzahl von zu jeweils mindestens einem Ausbringungsorgan führenden Leitungen, insbesondere Saatleitungen eingesetzt.

Kurz als Verteilvorrichtungen für körniges Gut wie insbesondere Sämaschinen bezeichnete Vorrichtungen zur Verteilung körnigen Guts auf mehrere Leitungen sind in zahlreichen Ausführungsvarianten bekannt. Herkömmlicherweise erfolgt die Kornförderung mit Hilfe eines Luftstromes, dem die Körner zudosiert werden. Anschließend wird der als Trägermedium dienende Luftstrom einem Verteiler zugeführt, der in eine Mehrzahl von Schlauchleitungen münden kann, die schließlich in nebeneinander angeordneten Scharen der Sämaschine enden können. Die Dosierung der Körner ermöglicht die Variation des Volumenstroms an ausgebrachten Körnern.

Weitere Möglichkeiten, auf die Dosierung der Körner in den einzelnen Leitungen, die zu den Scharen führen, Einfluss zu nehmen, bestehen nach dem Stand der Technik in der Regel nicht.

Werden bei einer solchen Verteilvorrichtung einzelne Leitungen abgeschaltet, d.h. in der Regel blockiert, so werden die der oder den abgesperrten Leitungen zugedachten Körner den offen verbleibenden zugeführt. Damit einher geht eine einer Verschwendung gleichkommende Überdosierung an Körnern an die offen verbleibenden Leitungen.

Durch Anordnung mindestens einer erfindungsgemäßen Einrichtung zur Lenkung einer körniges Gut umfassenden Strömung wahlweise durch mindestens eine erste Leitung sowie bedarfsweise durch mindestens eine zweite Leitung zwischen den Verteiler und eine oder mehrere von diesem abgehende Leitungen, insbesondere Schlauchleitungen kann zwischen einer zu einem Ausbringungsorgan, insbesondere einer Säschar führenden ersten Leitung, und einer zu einem Sammel- und/oder Auffangbehältnis führenden zweiten Leitung umgeschaltet werden.

Hierdurch wird eine Vorrichtung zur Verteilung körnigen Guts auf eine veränderliche Anzahl von zu jeweils mindestens einem Ausbringungsorgan führenden Leitungen, insbesondere Saatleitungen geschaffen, welche eine Einhaltung einer gleichbleibenden Konzentration an Körnern auch bei Absperrung einzelner zu Ausbringungsorganen führender Leitungen gewährleistet.

Diese vorteilhafte Weiterbildung der Erfindung sieht bevorzugt vor, dass eine erste Leitung der mindestens zwei Leitungen, zwischen denen hin- und hergeschaltet werden kann, zu mindestens einem Ausbringungsorgan, insbesondere einer Säschar führt, wohingegen eine zweite Leitung zu einem Auffangbehältnis führt.

Diese zweite Leitung kann beispielsweise direkt wieder einem Körner beherbergenden Reservoir zugeführt werden. Dies hat den Vorteil, dass eine einem einem strömungstechnischen Massenstrom als Quotient der Masse pro Zeiteinheit äquivalenten Körnerstrom entsprechende, einer Säschar zugeführte Konzentration von Körnern auch bei Abschaltung einzelner Leitungen konstant bleibt. Hierdurch wird die Kontinuitätsgleichung gewahrt, ohne wie beim Stand der Technik üblich die Ausbringung an Körnern in den offen verbleibenden Leitungen zu erhöhen.

Ein sich mit der Rückführung demnach ergebender Vorteil ist eine Beibehaltung gleicher Mengen und Mengenströme einhergehend mit einer gleichmäßigen und gleichbleibenden Verteilung körnigen Guts auf die offenen beziehungsweise offen verbleibenden, beispielsweise zu Ausbringungsorganen führende Leitungen.

Ein damit einhergehender Vorteil ist eine Beibehaltung einer optimalen Standraumzuteilung auch bei einem Teilbetrieb unter Abschaltung einzelner zu Ausbringungsorganen führender Leitungen.

Bei allen Ausgestaltungen der Erfindung kann eine Körner umfassende Strömung hergestellt werden, indem ein Mischstrom durch Beimengung Körner umfassenden körnigen Guts zu einem als Trägermedium dienenden Luftstrom erzeugt wird. Dieser kann die Körner umfassende Strömung bilden.

Soll eine besonders gleichmäßige Verteilung erhalten werden, so kann zunächst ein Mischstrom durch Beimengung Körner umfassenden körnigen Guts zu einem als Trägermedium dienenden Luftstrom erzeugt werden, und dieser anschließend einer Einrichtung zur Vereinzelung der Körner und zu deren gleichmäßiger Weitergabe zugeführt wird.

Prinzipiell kann auch zunächst eine Vereinzelung vorgenommen werden, wobei die vereinzelten Körner dann in gleichbleibenden Zeitintervallen einem als Trägermedium dienenden Luftstrom zugegeben werden.

Durch eine beispielsweise einer Fahrgeschwindigkeit einer landwirtschaftlichen Maschine proportionale Vereinzelung kann die Standraumzuteilung unter gleichzeitiger Verringerung des Saatgutbedarfs weiter optimiert werden.

Vorteile gegenüber dem Stand der Technik ergeben sich neben einer vollständigen Lösung der gestellten Aufgabe durch eine Umschaltung einer gleichmäßigen Verteilung körnigen Guts auf eine erste Zahl von Leitungen, beispielsweise Saatleitungen, auf eine von der ersten Zahl verschiedene zweite Zahl von Leitungen, beispielsweise Saatleitungen, ohne die Konzentration der ausgebrachten Körner in den jeweils aufrecht erhaltenen Körnerströmen zu verändern.

Zusätzliche Vorteile ergeben sich durch eine hohe Güte der Gleichverteilung des körnigen Guts auf die kurz als aktive Verteilerleitung bezeichnete, in der jeweiligen Schaltstellung bediente angeschlossene Leitung, einhergehend mit einer verbesserten Kornablage und Standraumzuteilung sowie einem geringeren Verbrauch körnigen Guts.

Die Erfindung kann einzelne oder mehrere einleitend in Verbindung mit dem Stand der Technik oder den hierzu zitierten Dokumenten erwähnte Merkmale aufweisen.

Ebenso kann die Einrichtung einzelne oder mehrere in Verbindung mit der Vorrichtung voranstehend oder nachfolgend insbesondere in Zusammenhang mit der zu den Zeichnungen zugehörigen Beschreibung noch beschriebene Merkmale aufweisen, genauso wie die Vorrichtung einzelne oder mehrere in Verbindung mit der Einrichtung voranstehend oder nachfolgend insbesondere in Zusammenhang mit der zu den Zeichnungen zugehörigen Beschreibung noch beschriebene Merkmale aufweisen kann.

Alternativ oder zusätzlich kann das Verfahren einzelne oder mehrere in Verbindung mit der Einrichtung und/oder der Vorrichtung voranstehend oder nachfolgend insbesondere in Zusammenhang mit der zu den Zeichnungen zugehörigen Beschreibung noch beschriebene Merkmale aufweisen, ebenso wie die Einrichtung und/oder die Vorrichtung einzelne oder mehrere in Verbindung mit dem Verfahren voranstehend oder nachfolgend insbesondere in Zusammenhang mit der zu den Zeichnungen zugehörigen Beschreibung noch beschriebene Merkmale aufweisen oder eine oder mehrere diese verwirklichende Merkmale aufweisen können.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung, die erfindungsgemäße Einrichtung und das erfindungsgemäße Verfahren ausgestaltet sein können und stellen keine abschließende Begrenzung dar. Es zeigen in schematischer Darstellung:
Fig. 1 ein erstes Ausführungsbeispiel einer Einrichtung zur Lenkung einer körniges Gut umfassenden Strömung wahlweise durch mindestens eine erste Leitung und bedarfsweise durch mindestens eine zweite Leitung, deren Strömungselement momentan eine erste von zwei jeweils eine Schaltposition bildenden stabilen Lagen einnimmt, in längs geschnittener Ansicht.
Fig. 2 die Einrichtung zur Lenkung einer körniges Gut umfassenden Strömung wahlweise durch mindestens eine erste Leitung und bedarfsweise durch mindestens eine zweite Leitung aus Fig. 1, wobei deren Strömungselement momentan eine zweite von zwei jeweils eine Schaltposition bildenden stabilen Lagen einnimmt, in teilweise längs geschnittener Ansicht.
Fig. 3 ein zweites Ausführungsbeispiel einer Einrichtung zur Lenkung einer körniges Gut umfassenden Strömung wahlweise durch mindestens eine erste Leitung und bedarfsweise durch mindestens eine zweite Leitung, deren Strömungselement eine von zwei jeweils eine Schaltposition bildenden stabilen Lagen einnimmt, in längs geschnittener Ansicht.
Fig. 4 ein drittes Ausführungsbeispiel einer Einrichtung zur Lenkung einer körniges Gut umfassenden Strömung wahlweise durch mindestens eine erste Leitung und bedarfsweise durch mindestens eine zweite Leitung, deren Strömungselement eine von zwei jeweils eine Schaltposition bildenden stabilen Lagen einnimmt, in längs geschnittener Ansicht.
Fig. 5 ein erstes Ausführungsbeispiel einer Vorrichtung zur Verteilung körnigen Guts auf eine veränderliche Anzahl von zu jeweils mindestens einem Ausbringungsorgan führenden Leitungen in teilweise geschnittener perspektivischer Ansicht.
Fig. 6 ein zweites Ausführungsbeispiel einer Vorrichtung zur Verteilung körnigen Guts auf eine veränderliche Anzahl von zu jeweils mindestens einem Ausbringungsorgan führenden Leitungen in teilweise geschnittener perspektivischer Ansicht.
Fig. 7 ein drittes Ausführungsbeispiel einer Vorrichtung zur Verteilung körnigen Guts auf eine veränderliche Anzahl von zu jeweils mindestens einem Ausbringungsorgan führenden Leitungen in teilweise geschnittener perspektivischer Ansicht.
Fig. 8 ein Ablaufdiagramm eines Verfahrens zur Lenkung einer körniges Gut umfassenden Strömung wahlweise durch mindestens eine erste Leitung und bedarfsweise durch mindestens eine zweite Leitung.

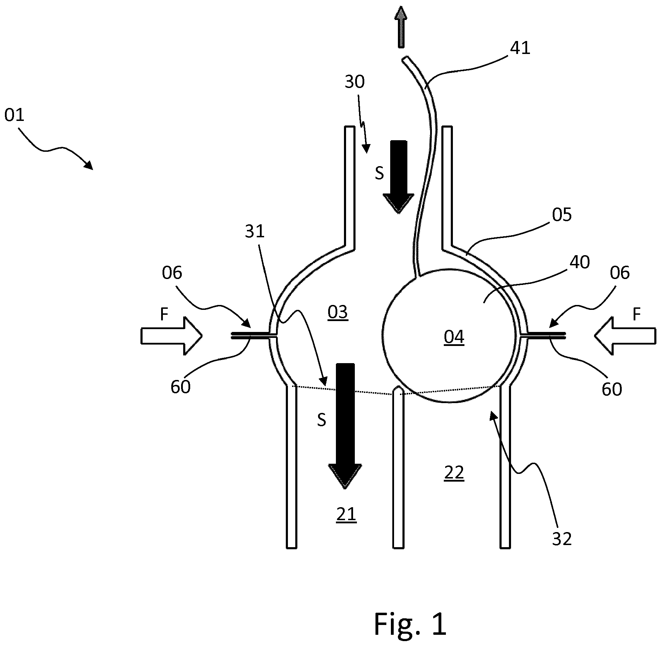

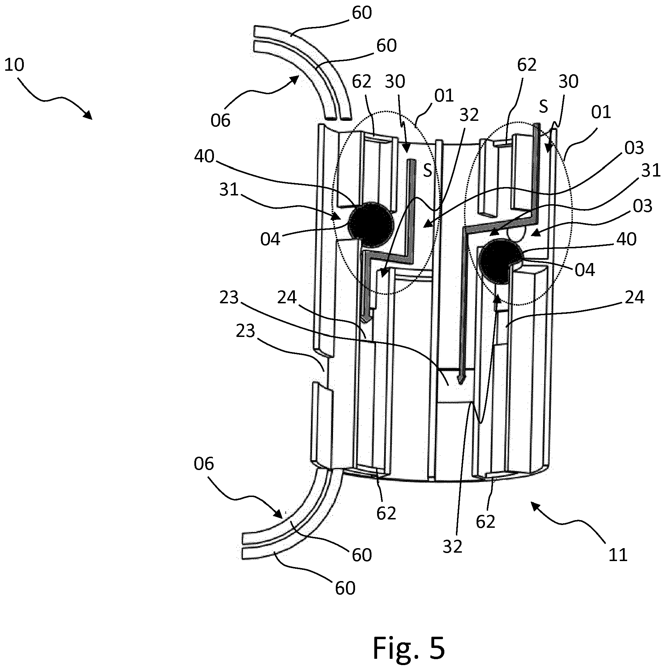

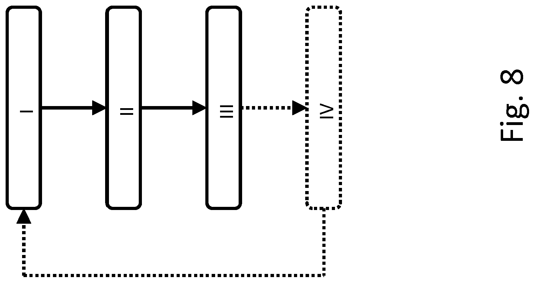

Ein in Fig. 8 in seinem Ablauf dargestelltes Verfahren zur Lenkung einer körniges Gut umfassenden, in Fig. 1, Fig. 2, Fig. 3, Fig. 4, Fig. 5 durch Pfeile S andeutungsweise dargestellte Strömung wahlweise durch mindestens eine erste Leitung 21 und bedarfsweise durch mindestens eine zweite Leitung 22 geht davon aus, dass die körniges Gut umfassende Strömung in einen Strömungsraum 03 mündet, von dem mindestens eine erste Leitung 21, beispielsweise durch in Fig. 5 dargestellte Fenster 23, und mindestens eine zweite Leitung 22, beispielsweise durch in Fig. 5 dargestellte Fenster 24, abgehen, und dass in dem Strömungsraum 03 ein Strömungselement 04 zumindest zum Teil beweglich beherbergt ist.

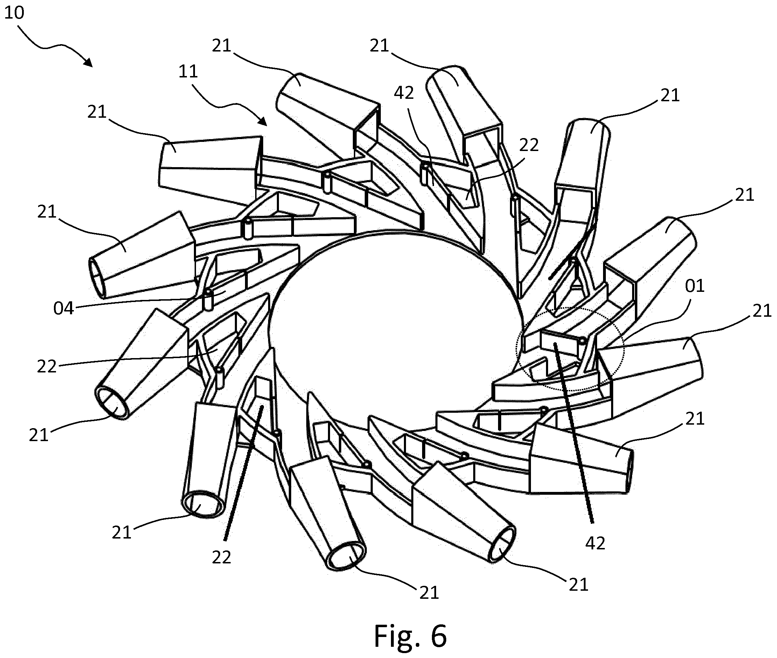

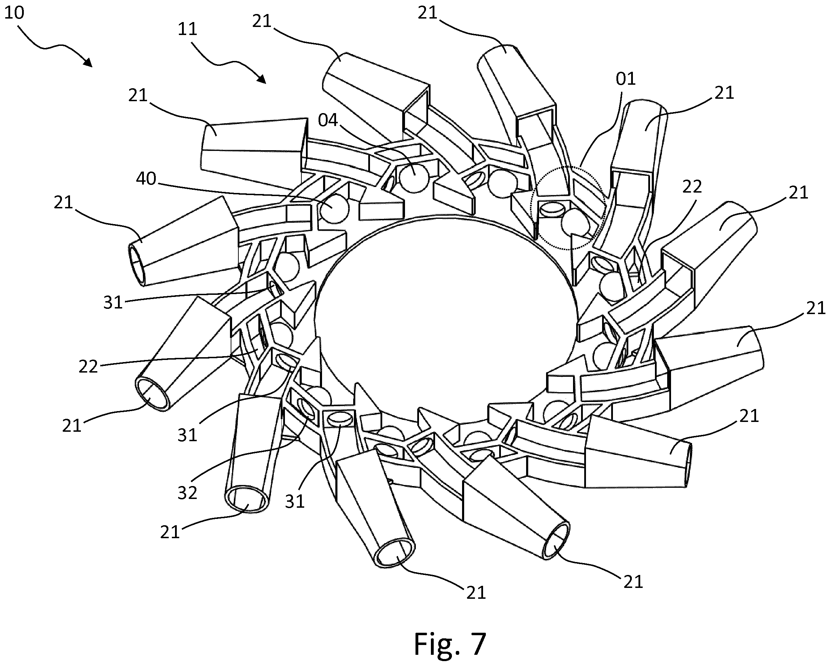

Die Leitungen 21 können beispielsweise wie in Fig. 5 gezeigt durch Fenster 23 und die Leitungen 22 durch Fenster 24 vom Strömungsraum 03 abgehen, wobei eine in Fig. 5 gezeigte Vorrichtung 10 zur Verteilung körnigen Guts auf eine veränderliche Anzahl von zu jeweils mindestens einem Ausbringungsorgan führenden Leitungen ebenso wie die in Fig. 6 und Fig. 7 gezeigten Vorrichtungen 10 mehrere Strömungsräume 03 mit jeweils einem in jedem von diesen zumindest zum Teil beweglich beherbergten Strömungselement 04 umfassen kann.

Wichtig ist an dieser Stelle bereits darauf hinzuweisen, dass bei einer entsprechenden Vorrichtung 10 mit mehreren jeweils ein Strömungselement 04 beherbergenden Strömungsräumen 03 die einzelnen jeweils in einem eigenen Strömungsraum 03 beherbergten Strömungselemente 04 nicht alle die selben Schaltpositionen einnehmen müssen, sondern vielmehr die Schaltpositionen der einzelnen Strömungselemente 04 individuell angesteuert werden können.

Das Verfahren sieht vor, dass das Strömungselement 04 in dem Strömungsraum 03 zumindest zwei stabile Schaltpositionen einzunehmen in der Lage ist.

Das Verfahren sieht darüber hinaus vor, dass es sich bei den beiden stabilen Schaltpositionen, welche das Strömungselement 04 einnehmen kann, um eine erste Schaltposition und um eine zweite Schaltposition handelt.

In der ersten Schaltposition blockiert das Strömungselement 04 eine in die erste Leitung 21 mündende, in Fig. 1, Fig. 2, Fig. 3, Fig. 4 jeweils durch gestrichelte Linien angedeutete Auslassöffnung 31 aus dem Strömungsraum 03. Dadurch schneidet das Strömungselement 04 die erste Leitung 21 von der Strömung ab.

In der zweiten Schaltposition blockiert das Strömungselement 04 eine in die zweite Leitung 22 mündende, in Fig. 1, Fig. 2, Fig. 3, Fig. 4 jeweils durch gestrichelte Linien angedeutete Auslassöffnung 32 aus dem Strömungsraum 03. Dadurch schneidet das Strömungselement 04 die zweite Leitung 22 von der Strömung ab.

Die vereinfacht als Einnahme stabiler Schaltposition definierten Zustände des Strömungselements 04 in den Schaltpositionen sehen dabei erfindungsgemäß vor, dass das Strömungselement 04 in den Schaltpositionen unter Einwirkung zumindest des auf es einwirkenden Staudrucks der in den Strömungsraum 03 einströmenden und durch die mindestens eine erste Leitung 21 oder durch die mindestens eine zweite Leitung 22 wieder aus dem Strömungsraum 03 austretenden Strömung jeweils eine stabile Lage einnimmt.

Das Verfahren sieht demnach vor, dass das Strömungselement 04 zumindest vom auf es einwirkenden Staudruck der den Strömungsraum 03 durcheilenden Strömung unterstützt, je eine der stabilen Schaltpositionen einnimmt. Damit wird das Strömungselement 04 erfindungsgemäß aus jeder momentanen Lage zwischen den Schaltpositionen durch die Strömung unterstützt in eine einer stabilen Endlage entsprechende Schaltposition gedrängt.

Die Aussage, wonach das Strömungselement 04 zumindest vom auf es einwirkenden Staudruck der den Strömungsraum 03 durcheilenden Strömung unterstützt je eine der stabilen Schaltpositionen einnimmt, umfasst hiernach, dass in den stabilen Schaltpositionen die Druckdifferenz zwischen dem im Strömungsraum 03 herrschenden statischen Druck und dem bei abgesperrter Auslassöffnung 31 oder 32 in der jeweiligen Leitung 21 oder 22, in welche die entsprechende Auslassöffnung 31, 32 mündet, herrschenden statischen Druck auf das Strömungselement 04 einwirkt. Mit einem geringfügigen Verlassen der stabilen Schaltpositionen verändern sich die statischen Drücke auf den gegenüberliegenden Seiten des Strömungselements 04 maßgeblich und es wirkt zusätzlich der Staudruck der Strömung auf das Strömungselement 04 ein. Zusätzlich wirken mit dem Verlassen der stabilen Schaltpositionen dynamische Effekte auf das Strömungselement 04 ein, etwa hervorgerufen durch Widerstands- und Auftriebsbeiwerte sowie beispielsweise geometrisch bedingte spezielle Strömungseffekte.

Das Strömungselement 04 ist hiernach in dem Strömungsraum 03 unter Überwindung einer Schaltkraft, die sich zusammensetzt aus einer Krafteinwirkung auf das Strömungselement 04 zumindest des Staudrucks der Strömung und sich hieran gegebenenfalls anschließender strömungsdynamischer Effekte zwischen den stabilen Schaltpositionen hin und her beweglich.

Welche Schaltposition das Strömungselement 04 aus einer beliebigen momentanen Lage heraus einnimmt ist dabei abhängig sowohl davon, auf welcher stabilen Schaltposition zugewandter Seite einer zwischen den Schaltpositionen befindlichen instabilen Zwischenposition sich das Strömungselement 04 in seiner momentanen Lage befindet, als auch welchen seiner Massenträgheit gleichkommenden Impuls in Betrag und in Richtung es momentan inne hat.

Das Verfahren sieht nunmehr vor, zur einem Umschalten zwischen einer Durchströmung der ersten Leitung 21 und einer Durchströmung der zweiten Leitung 22 gleichkommenden Lenkung einer körniges Gut umfassenden, in Fig. 1, Fig. 2, Fig. 3, Fig. 4, Fig. 5 durch Pfeile S andeutungsweise dargestellten Strömung wahlweise durch mindestens eine erste Leitung 21 oder durch mindestens eine zweite Leitung 22 mit einer zur Überwindung zumindest des Staudrucks der Strömung erforderlichen Kraft auf das Strömungselement 04 einzuwirken.

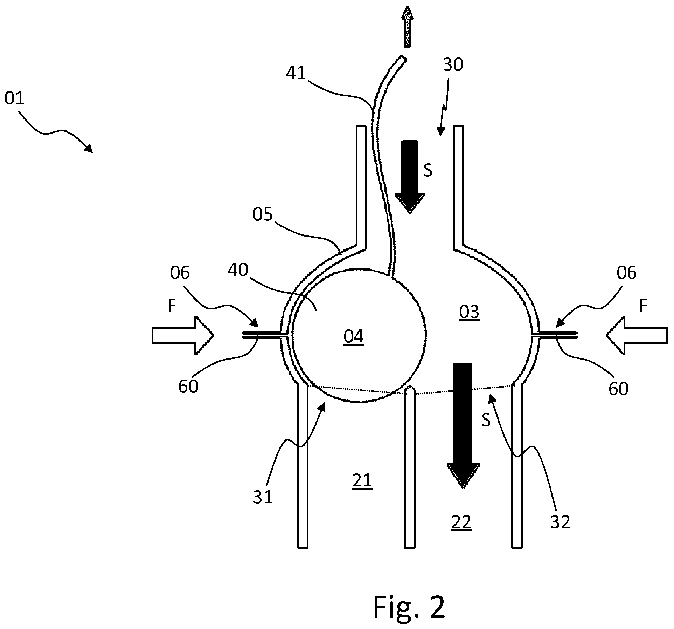

Erfindungsgemäß ist hierbei vorgesehen, dass die zum Hin- und Herschalten erforderliche Schaltkraft durch eine vorzugsweise impulsartige, berührungslose Krafteinwirkung in einer von der Strömungsrichtung verschiedenen, in Fig. 1, Fig. 2, Fig. 4 durch Pfeile F angedeuteten Richtung auf das Strömungselement 04 aufgebracht wird, die groß genug ist, um das Strömungselement 04 zu veranlassen, zunächst entgegen dem Staudruck der Strömung unter Überwindung sich hieran gegebenenfalls anschließender strömungsdynamischer Effekte seine beispielsweise in Fig. 1, Fig. 3, Fig. 4 gezeigte erste stabile Schaltposition über eine zwischen den stabilen Schaltpositionen befindliche instabile Zwischenposition hinweg zu verlassen, um schließlich zumindest vom Staudruck der Strömung wiederum gestützt eine von der ersten stabilen Schaltposition verschiedene und beispielsweise in Fig. 2 gezeigte zweite stabile Schaltposition einzunehmen.

Das Hin- und/oder Herschalten unter berührungslosem Aufbringen der zur Veranlassung einer Bewegung des Strömungselements 04 erforderlichen Schaltkraft wird im nachfolgenden teilweise auch kurz als Schaltung bezeichnet.

Insbesondere wird im nachfolgenden kurz als Schaltung bezeichnet, das Strömungselement 04 unter berührungsloser Krafteinwirkung dazu zu veranlassen, eine stabile Schaltposition zu verlassen, um daraufhin durch die Strömung gestützt eine andere stabile Schaltposition einzunehmen.

Ebenfalls wird im nachfolgenden die Einnahme einer eine bestimmte Leitung von der Strömung abtrennenden und eine andere Leitung von der Strömung durchströmenden Schaltposition durch das Strömungselement 04 kurz als Schaltung bezeichnet.

Der Ablauf des Verfahrens ist hiernach wie folgt anhand von Fig. 8 beschrieben.

In einem ersten Verfahrensschritt I ist eine erste Leitung 21 von der Körner umfassenden Strömung durchströmt. Das Strömungselement 04 befindet sich in einer stabilen Schaltposition, in welcher es eine in eine zweite Leitung 22 mündende Auslassöffnung 32 aus dem Strömungsraum 03 bedeckt (Fig. 1, Fig. 3, Fig. 4). Demnach ist in dieser Schaltposition die zweite Leitung 22 von der Strömung abgetrennt.

In einem auf den ersten Verfahrensschritt I folgenden zweiten Verfahrensschritt II soll die erste Leitung 21 von der Strömung abgeschnitten werden und stattdessen die zweite Leitung 22 von der Strömung durchströmt werden. Hierzu wird im zweiten Verfahrensschritt II berührungslos eine Kraft in einer von der Strömungsrichtung verschiedenen, in Fig. 1, Fig. 2, Fig. 4 durch dort nach links gerichtete Pfeile F angedeuteten Richtung auf das Strömungselement 04 ausgeübt.

Die durch eine vorzugsweise impulsartige, berührungslose Krafteinwirkung erzeugte, zum Hin- und Herschalten erforderliche Schaltkraft ist groß genug, um das Strömungselement 04 zu veranlassen, zunächst entgegen dem Staudruck der Strömung unter Überwindung sich hieran gegebenenfalls anschließender strömungsdynamischer Effekte seine beispielsweise in Fig. 1, Fig. 3, Fig. 4 gezeigte erste stabile Schaltposition über eine zwischen den stabilen Schaltpositionen befindliche instabile Zwischenposition hinweg zu verlassen, um schließlich zumindest vom Staudruck der Strömung wiederum gestützt eine von der ersten stabilen Schaltposition verschiedene und beispielsweise in Fig. 2 gezeigte zweite stabile Schaltposition einzunehmen.

In einem sich an den zweiten Verfahrensschritt II anschließenden dritten Verfahrensschritt III ist nunmehr die zweite Leitung 22 von der Körner umfassenden Strömung durchströmt. Das Strömungselement 04 befindet sich in einer stabilen Schaltposition, in welcher es eine in eine zweite Leitung 21 mündende Auslassöffnung 31 aus dem Strömungsraum 03 bedeckt (Fig. 2). Demnach ist in dieser Schaltposition die erste Leitung 21 von der Strömung abgetrennt.

Soll nach einer gewissen Zeit die zweite Leitung 22 wieder von der Strömung abgeschnitten und stattdessen wieder die erste Leitung 21 von der Strömung durchströmt werden, so kann in einem auf den dritten Verfahrensschritt III wie in Fig. 8 gestrichelt angedeutet gegebenenfalls vorgesehenen vierten Verfahrensschritt IV wiederum berührungslos eine Kraft in einer von der Strömungsrichtung verschiedenen, in Fig. 1, Fig. 2, Fig. 4 durch dort nach rechts gerichtete Pfeile F angedeuteten Richtung auf das Strömungselement 04 ausgeübt werden.

Die durch eine vorzugsweise impulsartige, berührungslose Krafteinwirkung erzeugte, zum Hin- und Herschalten erforderliche Schaltkraft ist groß genug, um das Strömungselement 04 zu veranlassen, zunächst entgegen dem Staudruck der Strömung unter Überwindung sich hieran gegebenenfalls anschließender strömungsdynamischer Effekte seine beispielsweise in Fig. 2 gezeigte zweite stabile Schaltposition über eine zwischen den stabilen Schaltpositionen befindliche instabile Zwischenposition hinweg zu verlassen, um schließlich zumindest vom Staudruck der Strömung wiederum gestützt eine von der zweiten stabilen Schaltposition verschiedene und beispielsweise in Fig. 1, Fig. 3, Fig. 4 gezeigte erste stabile Schaltposition wieder einzunehmen.

Hiernach herrscht dann wieder der selbe Zustand wie im ersten Verfahrensschritt I zu Beginn des Verfahrens, welches demnach bei Bedarf schrittweise zyklisch wiederholt werden kann.

Das erfindungsgemäße Verfahren eignet sich beispielsweise zum Wechseln der Durchströmung von Leitungen bei einer körniges Gut umfassenden Strömung, beispielsweise zur Strömungsteilung und/oder Umlenkung.

Die Erfindung sieht vor, dass die Krafteinwirkung auf das Strömungselement 04 durch einen Druckstoß erfolgt.

Hiernach wird durch eine kurze Einblasung von Druckluft das Strömungselement 04 aus seiner momentan eingenommenen stabilen Schaltposition förmlich herausgeschossen. Durch die sich unmittelbar hiernach einstellenden dynamischen Effekte der Einwirkung der Strömung auf das Strömungselement 04 nimmt dieses unverzüglich eine andere stabile Schaltposition ein.

Die Einblasung von Druckluft wirkt dabei direkt auf das Strömungselement 04, bevorzugt von einer Stelle aus, die vom Strömungselement 04 von der Strömung abgeschnitten ist.

Der Druckstoß kann - wie dies in Fig. 1, Fig. 2 durch Pfeile F angedeutet ist - in Richtung quer zur Strömungsrichtung und/oder quer zur durch den Staudruck in einer stabilen Lage ausgeübten Kraftrichtung auf das Strömungselement 04 erfolgen.

Gemäß einer Weiterbildung der Erfindung kann alternativ als Krafteinwirkung oder zusätzlich während der Krafteinwirkung ein Druckstoß auf das Strömungselement 04 entgegen der Strömungsrichtung erfolgen.

Dies kann sowohl vorteilhaft sein hinsichtlich des Umschaltens zwischen zwei Leitungen 21, 22, als auch hinsichtlich eines Umschaltens zwischen mehreren Leitungen.

Eine Kombination kann beispielsweise bei mehr als zwei Schaltpositionen vorteilhaft sein, etwa um das Strömungselement 04 in eine Schaltposition zu bringen, in der eine bestimmte Auslassöffnung abgesperrt beziehungsweise von der Strömung getrennt ist.

Eine besonders vorteilhafte Ausgestaltung des erfindungsgemäßen Verfahrens sieht vor, dass eine erste Leitung 21 der mindestens zwei Leitungen 21, 22, zwischen denen hin- und hergeschaltet werden kann, zu mindestens einem Ausbringungsorgan, insbesondere einer Säschar führt, wohingegen eine zweite Leitung 22 zu einem Sammel- und/oder Auffangbehältnis, insbesondere zu einem körniges Gut vorhaltendem Reservoir führt.

Indem von der zu mindestens einem Ausbringungsorgan führenden Leitung 21 auf die zu einem Sammel- und/oder Auffangbehältnis, insbesondere zu einem körniges Gut vorhaltendem Reservoir führende Leitung 22 und wieder zurück um- beziehungsweise hin- und hergeschaltet werden kann, lässt sich auf besonders einfache Art eine Vorrichtung zur Verteilung körnigen Guts auf eine veränderliche Anzahl von zu jeweils mindestens einem Ausbringungsorgan führenden Leitungen 21, insbesondere Saatleitungen, verwirklichen.

Ein voranstehend beschriebenes Verfahren kann durch eine in Fig. 1, Fig. 2, Fig. 3, Fig. 4, Fig. 5, Fig. 6 und Fig. 7 ganz oder teilweise dargestellte und zur Durchführung eines zuvor beschriebenen Verfahrens geeignete Einrichtung 01 zur Lenkung einer körniges Gut umfassenden Strömung wahlweise durch mindestens eine erste Leitung 21 oder bedarfsweise durch mindestens eine zweite Leitung 22 verwirklicht werden.

Die Einrichtung 01 umfasst einen von einem Gehäuse 05 zumindest zum Teil umschlossenen Strömungsraum 03 mit einer in diesen mündenden Einlassöffnung 30 und mindestens zwei in diesen mündenden beziehungsweise mit ihren Mündungen vom Strömungsraum 03 abgehenden Auslassöffnungen 31, 32.

Die Einlassöffnung 30 und die Auslassöffnungen 31, 32 können auf gegenüberliegenden Seiten in den Strömungsraum 03 münden.

Die Einrichtung 01 umfasst darüber hinaus ein in dem Strömungsraum 03 zumindest zum Teil beweglich beherbergtes Strömungselement 04.

Zumindest an jede der Auslassöffnungen 31, 32 jeweils mindestens eine Leitung 21, 22 angeschlossen.

Das Strömungselement 04 ist zwischen einer der Anzahl der Auslassöffnungen 31, 32 entsprechenden Zahl von Schaltpositionen zumindest zum Teil beweglich angeordnet.

Das Strömungselement 04 bedeckt in jeder der Schaltpositionen die Mündung einer der Auslassöffnungen 31, 32 in den Strömungsraum 03, wodurch es die jeweilige von ihm bedeckte Auslassöffnung 31, 32 absperrt.

Das Strömungselement 04 weist in den Schaltpositionen unter Einwirkung des auf es einwirkenden Staudrucks der durch die Einlassöffnung 30 in den Strömungsraum einströmenden und durch die mindestens eine Auslassöffnung 31, 32 aus dem Strömungsraum wieder austretenden Strömung jeweils eine stabile Lage auf.

Die Einrichtung 01 umfasst Mittel 06 zur berührungslosen Ausübung einer Krafteinwirkung auf das Strömungselement 04 in einer von der in Fig. 1, Fig. 2, Fig. 3, Fig. 4, Fig. 5 durch Pfeile S angedeuteten Strömungsrichtung verschiedenen Richtung.

Die Einnahme und die Einhaltung der stabilen Lagen wird dadurch begünstigt, dass mit geringfügigem Verlassen einer stabilen Lage das Strömungselement zusätzlich zu einer Differenz der statischen Drücke den Staudruck eine durch die dann stattfindende dynamische Umströmung hervorgerufene Kraft erfährt, welche es zusätzlich zurück in die vormals verlassene stabile Lage oder bei Überschreitung einer instabilen Zwischenposition in eine andere als die vormals verlassene stabile Lage drängt.

Durch eine Krafteinwirkung in einer von der Strömungsrichtung verschiedenen Richtung überwindet das Strömungselement 04 den auf es einwirkenden Staudruck und verlässt eine momentan eingenommene erste Schaltposition, um anschließend durch den weiterhin auf es einwirkenden Staudruck erneut eine stabile Lage in einer von der ersten Schaltposition verschiedenen zweiten Schaltposition einzunehmen.

Die Krafteinwirkung erfolgt vorteilhaft berührungslos. Bei einer Krafteinwirkung durch Berührung besteht die Gefahr eines Verschmutzens einhergehend mit einer Beeinflussung der stabilen Lagen in den Schaltpositionen. Dies hätte eine Verringerung der Betriebssicherheit zur Folge.

Die Mittel 06 zur berührungslosen Ausübung einer Krafteinwirkung umfassen erfindungsgemäß mindestens zwei in verschiedenen Schaltpositionen auf das Strömungselement 04 in Richtung einer Lösung aus dessen jeweiliger Schaltposition gerichtete, zur Ausübung der Krafteinwirkung, wahlweise jeweils allein oder gemeinsam, mit einer Druckluftquelle in Verbindung bringbare Steuerleitungen 60.

Die Krafteinwirkung erfolgt hiernach durch einen Druckstoß oder zumindest unter Mitwirkung eines Druckstoßes.

Hierbei bezeichnet der Begriff Druckstoß eine zeitlich Begrenzte Einwirkung eines Druckluftaustritts aus einer oder aus beiden, bei mehreren Schaltpositionen optional auch aus allen zur Schaltung eines Strömungselements 04 vorgesehenen Steuerleitungen 60.

Beispielsweise kann der Druckstoß in Richtung quer zur Strömungsrichtung und/oder quer zur durch den Staudruck in einer stabilen Lage ausgeübten Kraftrichtung erfolgen.

Denkbar ist außerdem alternativ oder zusätzlich ein Druckstoß entgegen der Strömungsrichtung. Eine Kombination kann beispielsweise bei mehr als zwei Schaltpositionen vorteilhaft sein, etwa um das Strömungselement 04 in eine Schaltposition zu bringen, in der eine bestimmte Auslassöffnung abgesperrt beziehungsweise von der Strömung getrennt ist.

Hierbei können während eines Umschaltvorgangs, bei dem das Strömungselement 04 von einer ersten Schaltposition in eine zweite Schaltposition überführt wird, beispielsweise bei mehr als zwei Auslassöffnungen von den offen zu verbleiben beabsichtigten Auslassöffnungen, beispielsweise von deren Mündungen zum Strömungsraum ausgehend, anhaltend oder impulsartig Druckstöße ausgehen, welche das Strömungselement 04 daran hindern, die Mündungen der offen zu verbleiben beabsichtigten Auslassöffnungen abzudecken. Durch die während des Umschaltvorgangs von den offen zu verbleiben beabsichtigten Auslassöffnungen ausgehend auf das Strömungselement 04 einwirkenden dauerhaften oder impulsartigen Druckstöße wird das Strömungselement 04 in die gewünschte, einzig nicht durch Druckstöße gestörte Schaltposition wechseln beziehungsweise fallen.

Der Begriff Stoß steht hier stellvertretend für eine im Vergleich zur Anhaltenden Dauer der Strömung kurze Einwirkungsdauer von beispielsweise wenigen tausendstel Sekunden bis hin zu mehreren Sekunden.

Vorteilhaft kann eine Kugel 40 als Strömungselement 04 vorgesehen sein.

Als Strömungselement 04 kommt beispielsweise eine frei im Strömungsraum beweglich beherbergte Kugel 40 in Frage. Diese ist ohne gesonderte Dichtmittel ohne weiteres in der Lage, kreisrunde Mündungen von Auslassöffnungen 31, 32 abzudichten und damit eine von der Mündung abgehende Auslassöffnung 31, 32 vom Strömungsraum 03 und damit von der körniges Gut umfassenden Strömung beziehungsweise zumindest von deren körnigem Gut abzutrennen.

Der Strömungsraum 03 kann mit dem Strömungselement 04 korrespondierende Querschnittsabmessungen aufweisen. Im Falle einer Kugel 40 als Strömungselement 04 haben die Querschnitte der Mündungen vom Strömungsraum 03 hin zu den Ein- und Auslassöffnungen 31, 32 vorteilhaft einen konvergenten oder einen divergenten oder einen konvergent-divergenten Verlauf mit einem jüngsten Querschnitt kleiner als die Kugel 40. Der Strömungsraum 03 selbst weist vorteilhaft einen derart gestalteten Querschnitt auf, dass die Kugel 40 in ihm zwischen ihren Schaltpositionen frei beweglich ist.

Die Partie des Strömungsraums 03, in dem das als Kugel 40 ausgeführte Strömungselement 04 frei beweglich ist, kann als ein torusartiger geometrischer Raum beschrieben werden, der sich entlang einer Bewegungsbahn des Mittelpunkts der Kugel 40 erstreckt, und innerhalb dem sämtliche Punkte auf der Oberfläche der mit ihrem Mittelpunkt entlang der Bewegungsbahn fortbewegten Kugel 40 liegen.

Alternativ können eine oder mehrere Klappen 42 als Strömungselement 04 vorgesehen sein, wobei jede Klappe 42 zwischen den Mündungen von zwei Auslassöffnungen 31, 32 in den Strömungsraum 03 angeordnet ist. Die Anzahl der Klappen 42 entspricht dabei der Zahl der Auslassöffnungen 31, 32 abzüglich eins.

Im einfachsten Fall einer zum Hin- und Herschalten zwischen zwei Leitungen 21, 22 vorgesehenen Einrichtung 01 genügt demnach eine Klappe 42, um zwischen den beiden Leitungen 21, 22 hin und her zu schalten.

Die Klappen 42 sind zwischen den Mündungen gelenkig, an deren gegenüberliegenden Enden frei beweglich angeordnet.

Eine besonders vorteilhafte Ausgestaltung der Einrichtung 01 sieht vor, dass eine erste Leitung 21 der mindestens zwei Leitungen 21, 22, zwischen denen hin- und hergeschaltet werden kann, zu mindestens einem Ausbringungsorgan, insbesondere einer Säschar führt, wohingegen eine zweite Leitung 22 zu einem Sammel- und/oder Auffangbehältnis, insbesondere zu einem körniges Gut vorhaltendem Reservoir führt.

Eine oder mehrere solche Einrichtungen 01 können in eine insbesondere als pneumatische Sämaschine ausgeführte oder einen Teil einer solchen bildenden oder von einem Teil einer solchen umfassten Vorrichtung 10 zur Verteilung körnigen Guts auf eine veränderliche Anzahl von zu jeweils mindestens einem Ausbringungsorgan führenden Leitungen eingebracht einem einfachen Zu- und Abschalten beispielsweise einzelner Reihen von Säscharen dienen.

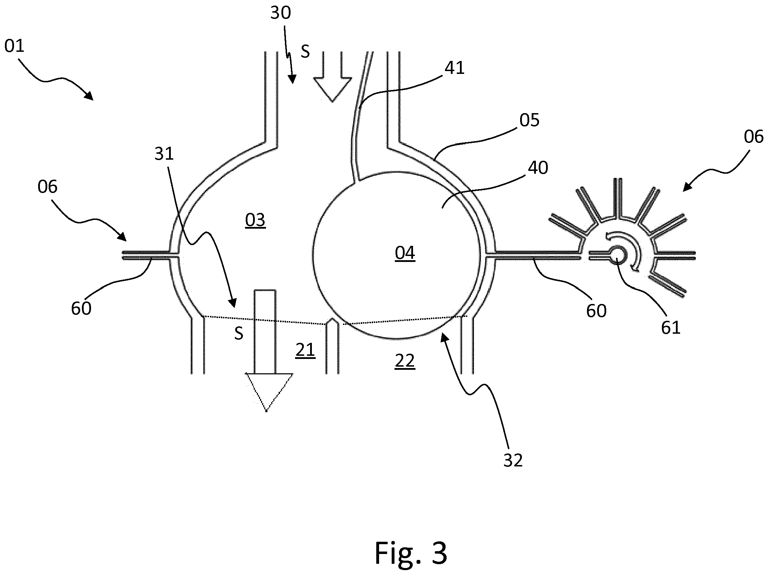

Fig.1 zeigt eine zur Abschaltung einzelner Reihen von pneumatischen Sämaschinen vorgesehene, kurz auch als Ventilweiche bezeichnete Einrichtung 01 zur Lenkung einer körniges Gut umfassenden Strömung wahlweise durch mindestens eine erste Leitung 21 oder bedarfsweise durch mindestens eine zweite Leitung 22. Im oberen Bereich ist die Zuführung einer durch eine Einlassöffnung 30 in einen Strömungsraum 03 mündenden Säleitung einer pneumatischen Sämaschine zu sehen. Mit Einnahme der in Fig. 1 gezeigten Schaltposition blockiert das Strömungselement 04 die in die zweite Leitung 22 mündende Auslassöffnung 32. Gleichzeitig gibt das Strömungselement 04 die in die erste Leitung 21 mündende Auslassöffnung 31 frei. Befindet sich das Strömungselement 04 in der in Fig. 2 dargestellten Schaltposition, muss die in Fig. 1 dargestellte Schaltposition erst erzeugt werden. Mit einer den in Fig. 1 gezeigten Zustand herstellenden Schaltung kann nun die weiterführende erste Leitung 21 des Saatgutes gewählt werden (Saatgutfluss: Schwarzer Pfeil S). Die kurz als Abgangsleitung bezeichnete abgehende, erste Leitung 21 geht dabei an das Schar. Die Säfunktion ist hiermit eingeschaltet. Die zweite Leitung 22 geht wieder zurück in den Tank oder in den Verteilerturm. Wird eine den in Fig. 2 gezeigten Zustand herstellende Schaltung gewählt, bei dem die erste Leitung 21 von der Strömung abgeschnitten ist und die zweite Leitung 22 durchströmt ist, so ist die Säfunktion ausgeschaltet. Das das schaltende Element der Weiche bildende Strömungselement 04 ist hierbei in einer kugeligen Form oder es kann beispielsweise als eine Klappe 42 ausgeführt sein (Fig. 6). Ein Umschalten zwischen der ersten Leitung 21 und der zweiten Leitung 22 erfolgt durch einen das Strömungselement 04 aus einer beispielsweise in Fig. 1, Fig. 3 gezeigten stabilen Lage befördernden Druckluftstoß. Nach diesem nimmt das Strömungselement 04 dann eine Schaltposition in einer anderen stabilen Lage ein (Fig. 2). Demnach kann mit einem pneumatischen Luftstrom (Druckluft) zwischen den in Fig. 1 und Fig. 2 beispielhaft gezeigten Schaltpositionen hin und her geschaltet werden (weiße Pfeile F links und rechts).

Durch die unmittelbare Wirkung des Druckluftstoßes auf das in jeder seiner stabilen Schaltpositionen unmittelbar vor der Mündung einer zur Einbringung des Druckluftstoßes vorgesehenen Steuerleitung 60 in den Strömungsraum 03 befindlichen Strömungselements 04 kann auf eine Steuerung einer abwechselnden Beaufschlagung der gegenüberliegenden Mündungen der Steuerleitung 60 verzichtet werden, sofern die Beaufschlagung impulsartig erfolgt.

Durch Betätigen eines Druckluftstoßes wird das als Kugel 40 ausgeführte Strömungselement 04 aus seiner in Fig. 1 gezeigten ersten stabilen Schaltposition auf die gegenüberliegende Seite bewegt (Fig. 2). Dort nimmt es dann in seiner in Fig. 2 gezeigten zweiten Schaltposition ebenfalls eine stabile Lage ein (Fig. 2). Das Strömungselement 04 kann anstelle von als eine Kugel 40 als eine einseitig gelenkig angeschlagene Klappe 42 ausgeführt sein.

Mit einer in Fig. 3 auf der rechten Seite angedeuteten, einstellbaren Druckluft-Weiche 61 können mehrere beispielsweise als Klappen 42 (Fig. 6) oder als Kugeln 40 ausgeführte Strömungselemente 04 in individuelle Richtungen geschaltet werden. Die Druckluft-Weiche 61 kann mit einem elektronischen Steuerelement ausgestattet sein, um wie ein Steuerblock ähnlich einer Hydrauliksteuerung eine Vielzahl von Steuerleitungen 60 anzusteuern.

Mit einer solchen Druckluft-Weiche 61 können beispielsweise bei einer Vorrichtung 10 zur Verteilung körnigen Guts auf eine veränderliche Anzahl von zu jeweils mindestens einem Ausbringungsorgan führenden Leitungen 21, die mehrere Einrichtungen 01 zur Lenkung einer körniges Gut umfassenden Strömung wahlweise durch mindestens eine erste Leitung 21 oder bedarfsweise durch mindestens eine zweite Leitung 22 umfasst, die Strömungselemente 04 mehrerer oder aller Einrichtungen 01 hin und her geschaltet werden.

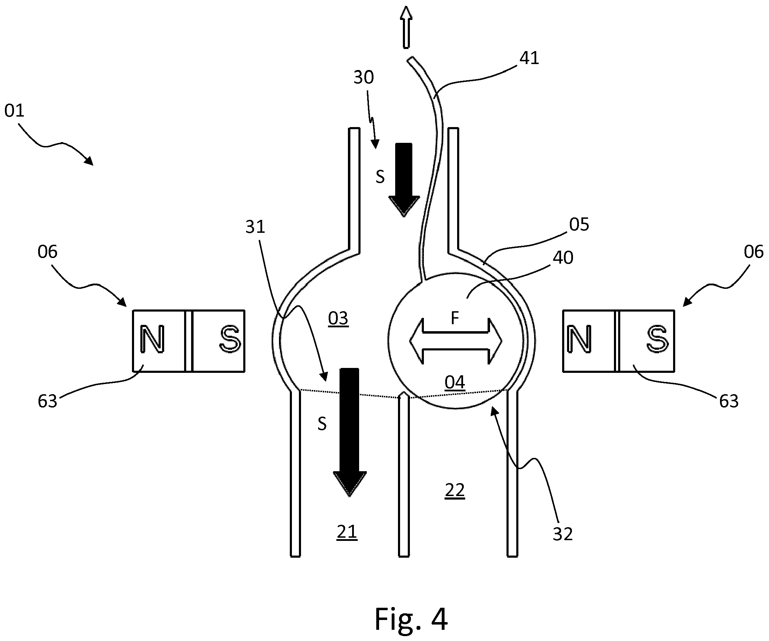

Zusätzlich kann die Krafteinwirkung magnetisch, insbesondere elektromagnetisch erfolgen (Fig. 4).

Fig. 4 zeigt eine Einrichtung 01, bei der die Mittel 06 zur berührungslosen Ausübung einer Krafteinwirkung mindestens zwei auf gegenüberliegenden Seiten zweier dazwischen befindlicher Schaltpositionen angeordnete und unabhängig voneinander mit einer Stromquelle verbindbare Elektromagneten 63 umfassen.

Alternativ oder zusätzlich ist denkbar, die Krafteinwirkung elektrostatisch zu erzeugen.

Der Vollständigkeit halber sei erwähnt, dass auch Kombinationen der verschiedenartigen Erzeugungen der Krafteinwirkung denkbar sind.

Da das zu transportierende Medium Saatgut auch mit Schmutz und Beize behaftet sein kann, kann es vorkommen, dass das beispielsweise durch mindestens eine Klappe 42 (Fig. 6), eine Kugel 40 (Fig. 1, Fig. 2, Fig. 3, Fig. 4, Fig. 5, Fig. 7) oder wenigstens einen Schieber gebildete schaltende Strömungselement 04 verklebt.

Um dies zu verhindern, kann mit einem bevorzugt als bewegliches, seilähnliches Element ausgeführten Fortsatz 41 die Kugel 40 gezogen werden und aus beiden Schaltpositionen gelöst werden. Dies kann dabei zentral für alle Strömungselemente 04 sämtlicher Einrichtungen 01 einer Vorrichtung 10 zur Verteilung körnigen Guts auf eine veränderliche Anzahl von zu jeweils mindestens einem Ausbringungsorgan führenden Leitungen 21 in einem Reinigungsprogramm ermöglicht werden. Anschließend kann eine Positionswahl der Klappe 42 beziehungsweise der Kugel 40 erneut erfolgen.

Der Fortsatz 41 kann biegeschlaff seilartig ausgeführt sein, wobei er in diesem Fall stromauf gehalten wird.

Alternativ kann der Fortsatz biegeelastisch ausgeführt sein, beispielsweise aus einem feder- oder gummielastischen Material. Das insbesondere als Kugel 40 ausgeführte Strömungselement 04 kann aus dem selben Material hergestellt sein. Somit können Kugel 40 und Fortsatz 41 besonders kostengünstig einstückig beispielsweise in einem Spritzgussprozess hergestellt werden. Ein mehrstufiger Spritzgussprozess erlaubt außerdem die einstückige Herstellung mit verschiedenen Eigenschaften für Fortsatz 41 und Kugel 40.

Vorteilhaft steht der Fortsatz 41 stromauf, i.e. entgegen der Strömungsrichtung ab.

Der Fortsatz 41 kann zumindest bis in die Mündung der Einlassöffnung 30 in den Strömungsraum 03 reichen. Dies hat bei einer biegeelastischen Ausgestaltung des Fortsatzes 41 den zusätzlichen Vorteil einer Stabilisierung der Lage und/oder des Schaltvorgangs des Strömungselements 04 zur Folge.

Die beim Stand der Technik eingesetzten Schaltelemente sind neben ihrer unzureichenden Beeinträchtigung der Konstanthaltung der Kornablage je Ausbringungsorgan teuer und aufwendig, da sie derart ausgebildet sein müssen, dass sie ihre Funktion auch bei Anhaftungen und Verschmutzung aufrecht zu erhalten in der Lage sind. Daher wird beim Stand der Technik eine Mechanik verwendet die zur Not auch eine derart hohe Kraft aufbringen kann, die Klappen zu bewegen, auch wenn diese verklebt sind.

Hintergrund ist, dass beispielsweise eine Beize als Pflanzenschutzmittel, welche das Saatgut umgibt, kleben kann. Wenn nun beispielsweise auf großen Feldern lange gesät wird, wobei ständig das mit Beize behaftete Saatgut durch die Leitungen strömt, kommt es häufig vor, dass die Klappen mit der Zeit festsitzen.

Bei der Erfindung wird demgegenüber das Strömungselement 04 berührungslos durch Druckstoß, beispielsweise per Druckluftstoß und wahlweise zusätzlich elektromagnetisch geschaltet.

Mittels eines als bewegliches, seilähnliches Element ausgeführten Fortsatzes 41 kann das insbesondere als Kugel 40 ausgeführte Strömungselement 04 beispielsweise im Rahmen eines Verfahrens zur Lenkung einer körniges Gut umfassenden, in Fig. 1, Fig. 2, Fig. 3, Fig. 4, Fig. 5 durch Pfeile S andeutungsweise dargestellte Strömung wahlweise durch mindestens eine erste Leitung 21 und bedarfsweise durch mindestens eine zweite Leitung 22 beispielsweise regelmäßig, etwa nach einer bestimmten Betriebszeit und/oder zwischen aufeinanderfolgenden Durchströmungen, etwa am Ende eines Feldes während des Wendens einer Sämaschine entgegen der herrschenden Strömungsrichtung aus seiner momentanen stabilen Schaltposition herausgezogen werden, um es etwa von Anhaftungen zu befreien.

Mittels eines als bewegliches, seilähnliches Element ausgeführten Fortsatzes 41 können darüber hinaus bei einer Vorrichtung 10 zur Verteilung körnigen Guts auf eine veränderliche Anzahl von zu jeweils mindestens einem Ausbringungsorgan führenden Leitungen 21, die mehrere Einrichtungen 01 zur Lenkung einer körniges Gut umfassenden Strömung wahlweise durch mindestens eine erste Leitung 21 oder bedarfsweise durch mindestens eine zweite Leitung 22 umfasst, die Strömungselemente 04 mehrerer oder aller Einrichtungen 01 beispielsweise am Ende eines Feldes während des Wendens einer Sämaschine einem Reinigungsprozess unterworfen werden, indem sie entgegen der herrschenden Strömungsrichtung aus ihren momentanen stabilen Schaltpositionen herausgezogen werden, um sie etwa von Anhaftungen zu befreien.

Dies kann beispielsweise in einem Verfahren zum Betrieb einer entsprechenden Vorrichtung festgelegt sein, etwa nach einer bestimmten Betriebsdauer oder nach Zurücklegen einer bestimmten, vorgebbaren Wegstrecke, etwa jeweils bei Erreichen des Endes eines Feldes während der Aussaat.

Das eigentliche lösen der Klappen 42 oder Kugeln 40 wird hiernach zentral für alle Klappen 42 oder Kugeln 40 gleichzeitig durch geführt, beispielsweise mit Hilfe einer Schnur oder eines Seils, allgemein mit Hilfe an den Strömungselementen 04 angeordneter Fortsätze 41. Indem an allen Fortsätzen 41 gleichzeitig oder in kurzer zeitlicher Folge nacheinander gezogen wird, werden die Klappen 42 oder Kugeln 40 aus ihrer gegebenenfalls festsitzenden Schaltposition gelöst und sind hiernach wieder frei hin und her schaltbar.

Wird der Zug auf den oder die Fortsätze 41 wieder aufgehoben, können die Schaltpositionen der Strömungselemente 04 wieder berührungslos durch Druckstoß, beispielsweise durch Druckluftimpulse und wahlweise zusätzlich mit Hilfe der Magnetsteuerung, festgelegt werden.

Vorteilhaft erfolgt der Reinigungsprozess beziehungsweise die Umschaltung am ende des Feldes. Zu diesem Zeitpunkt wird nicht gesät. Hierdurch existiert ein Zeitfenster für einen solchen Reinigungs- und/oder Umschaltprozess, ohne Beeinträchtigung der Aussaat.

Das beschriebene Verfahren und die beschriebene Einrichtung 01 ermöglichen ein berührungsfreies Hin- und Herschalten zwischen mindestens zwei Leitungen 21, 22, beispielsweise um eine Körner umfassende Strömung einer zu einer Säschar führenden Leitung 21 zuzuführen sowie bedarfsweise die zu der Säschar führende Leitung 21 von der Strömung abzuschneiden, indem diese einer anderen Leitung 22 zugeführt wird.

Vorteilhaft werden das erfindungsgemäße Verfahren und die ein als Strömungsweiche bezeichenbares Schaltelement bildende erfindungsgemäße Einrichtung 01 zur Lenkung einer körniges Gut umfassenden Strömung wahlweise durch mindestens eine erste Leitung 21 sowie bedarfsweise durch mindestens eine zweite Leitung 22 in Verbindung mit einer Vorrichtung 10 zur Verteilung körnigen Guts auf eine veränderliche Anzahl von zu jeweils mindestens einem Ausbringungsorgan führenden Leitungen 21, insbesondere Saatleitungen eingesetzt.

Bei einer solchen, auch als Verteilvorrichtung für körniges Gut, insbesondere als Teil einer Sämaschine bezeichneten Vorrichtung 10 zur Verteilung körnigen Guts auf eine veränderliche Anzahl von zu jeweils einem Ausbringungsorgan führenden Leitungen 21 erfolgt die Kornförderung mit Hilfe eines Luftstromes, dem die Körner zudosiert werden. Anschließend wird der als Trägermedium dienende Luftstrom einem in Fig. 5, Fig. 6, Fig. 7 dargestellten Verteiler 11 zugeführt, der in eine Mehrzahl von zu Ausbringungsorganen führenden, typischerweise als Schlauchleitungen ausgeführte Leitungen 21 mündet.

Die Schlauchleitungen enden schließlich in nebeneinander angeordneten Scharen der Sämaschine. Die Dosierung der Körner kann volumetrisch oder gewichtsbezogen erfolgen. Besonders vorteilhaft erfolgt die Dosierung der Körner jedoch stückweise, d.h. vereinzelt.

Eine entsprechend ausgestaltete erfindungsgemäße Vorrichtung 10 zur Verteilung körnigen Guts auf eine veränderliche Anzahl von zu jeweils mindestens einem Ausbringungsorgan führenden Leitungen 21, mit einem in eine Mehrzahl von zu jeweils mindestens einem Ausbringungsorgan führenden Leitungen 21 mündenden Verteiler 11 umfasst eine oder mehrere zuvor beschriebene Einrichtungen 01.

Die zumindest eine Einrichtung 01 ist zwischen dem Verteiler 11 und einem oder mehreren an wenigstens eine von dem Verteiler 11 abgehende Leitung 21 angeschlossenen Ausbringungsorganen angeordnet.

Eine Einrichtung 01 dient hierbei der wahlweisen Absperrung einer Leitung 21.

Damit entspricht die Zahl der Einrichtungen 01 der Vorrichtung 10 höchstens der Anzahl der jeweils zu einer oder mehreren Ausbringungsorganen führenden Leitungen 21.

An mindestens eine erste Auslassöffnung 31 der Einrichtung 01 ist wenigstens eine erste Leitung 21 angeschlossen, die zu mindestens einem Ausbringungsorgan führt. An zumindest eine zweite Auslassöffnung 32 ist wenigstens eine zweite Leitung 22 angeschlossen ist, die zu einem Sammel- und/oder Auffangbehältnis führt.

Die Vorrichtung 10 kann darüber hinaus Mittel zur Erzeugung eines als Trägermedium dienenden Luftstroms umfassen, dem Körner umfassendes körniges Gut zudosiert wird. Darüber hinaus kann die Vorrichtung 10 Mittel zur Zudosierung Körner umfassenden körnigen Guts zu dem Luftstrom umfassen.

Die zu den Ausbringungsorganen führenden Leitungen 21 sind bevorzugt zumindest abschnittsweise als Schlauchleitungen ausgeführt.

Durch Anordnung mindestens einer erfindungsgemäßen Einrichtung 01 zur Lenkung einer körniges Gut umfassenden Strömung wahlweise durch mindestens eine erste Leitung 21 sowie bedarfsweise durch mindestens eine zweite Leitung 22 zwischen den Verteiler 11 und ein oder mehrere an von diesem abgehende, insbesondere zumindest zum Teil als Schlauchleitungen ausgeführte Leitungen 21 angeschlossene Ausbringungsorgane kann zwischen einer zu einem Ausbringungsorgan, insbesondere einer Säschar führenden ersten Leitung 21, und einer zu einem Sammel- und/oder Auffangbehältnis führenden zweiten Leitung 22 umgeschaltet werden.

Diese vorteilhafte Weiterbildung der Erfindung sieht bevorzugt vor, dass eine erste Leitung 21 der mindestens zwei Leitungen 21, 22, zwischen denen hin- und hergeschaltet werden kann, zu mindestens einem Ausbringungsorgan, insbesondere einer Säschar führt, wohingegen eine zweite Leitung 22 zu einem Sammel- und/oder Auffangbehältnis führt.

Vorteilhaft kommuniziert das Sammel- und/oder Auffangbehältnis mit einem körniges Gut vorhaltenden Reservoir. Alternativ umfasst das Sammel- und/oder Auffangbehältnis ein körniges Gut vorhaltendes Reservoir, oder das Sammel- und/oder Auffangbehältnis ist von einem körniges Gut vorhaltenden Reservoir umfasst.

Die zweite Leitung 22 kann beispielsweise direkt wieder einem Körner beherbergenden Reservoir zugeführt werden. Dies hat den Vorteil, dass eine einem einem strömungstechnischen Massenstrom als Quotient der Masse pro Zeiteinheit äquivalenten Körnerstrom entsprechende, einer Säschar zugeführte Konzentration von Körnern auch bei Abschaltung einzelner Leitungen 21 konstant bleibt. Hierdurch wird die Kontinuitätsgleichung gewahrt, ohne wie beim Stand der Technik üblich die Ausbringung an Körnern in den offen verbleibenden Leitungen 21 zu erhöhen.

Ein sich mit der Rückführung demnach ergebender Vorteil ist eine Beibehaltung gleicher Mengen und Mengenströme einhergehend mit einer gleichmäßigen und gleichbleibenden Verteilung körnigen Guts auf die offenen beziehungsweise offen verbleibenden, beispielsweise zu Ausbringungsorganen führende Leitungen 21.

Ein damit einhergehender Vorteil ist eine Beibehaltung einer optimalen Standraumzuteilung auch bei einem Teilbetrieb unter Abschaltung einzelner zu Ausbringungsorganen führender Leitungen 21.

Bei allen Ausgestaltungen der Erfindung kann eine Körner umfassende Strömung hergestellt werden, indem ein Mischstrom durch Beimengung Körner umfassenden körnigen Guts zu einem als Trägermedium dienenden Luftstrom erzeugt wird. Dieser kann die Körner umfassende Strömung bilden.

Soll eine besonders gleichmäßige Verteilung erhalten werden, so kann zunächst ein Mischstrom durch Beimengung Körner umfassenden körnigen Guts zu einem als Trägermedium dienenden Luftstrom erzeugt werden, und dieser anschließend einer Einrichtung zur Vereinzelung der Körner und zu deren gleichmäßiger Weitergabe zugeführt wird.

Prinzipiell kann auch zunächst eine Vereinzelung vorgenommen werden, wobei die vereinzelten Körner dann in gleichbleibenden Zeitintervallen einem als Trägermedium dienenden Luftstrom zugegeben werden.

Durch eine beispielsweise einer Fahrgeschwindigkeit einer landwirtschaftlichen Maschine proportionale Vereinzelung kann die Standraumzuteilung unter gleichzeitiger Verringerung des Saatgutbedarfs weiter optimiert werden.

Die in Fig. 5. gezeigte Ausführung stellt innerhalb eines drehenden Verteilrotors einer Vorrichtung 10 angeordnete Einrichtungen 01 dar mit als Kugeln 40 oder Klappen 42 ausgestalteten Strömungselementen 04. Entsprechende Vorrichtungen 10 sind beispielsweise in den Patentanmeldungen DE 10 2016 010 270 und DE 10 2016 010 954 und in den hieraus hervorgegangen internationalen Patentanmeldungen mit den internationalen Aktenzeichen PCT/EP2017/071254 und PCT/EP2017/072545 beschrieben. Auf Grund der Fliehkraft werden hier die Saatkörner nach außen gedrängt. Je nachdem in welcher Position sich die Schaltklappen oder Schaltkugeln befinden, wird jeweils eine der beiden Austrittsebenen bedient. Falls nun eine Ebene (Teilbreite) der Sämaschine abgeschaltet werden soll, wird gleichzeitig der Saatgutstrom der jeweils anderen Ebene zugeführt. Die Durchströmung der Luft kann an anderer Stelle erfolgen, welche hier nicht dargestellt wurde. Die Endpositionen der Kugeln 40 bildenden Mündungen der Auslassöffnungen 31, 32 in den Strömungsraum 03 sind vorteilhaft auch kugelförmig ausgeführt, um eine möglichst gute Abdichtung der Mündungen durch das Strömungselement 04 in dessen stabilen Schaltpositionen zu erzielen. Zur Vereinfachung wurde dies in der Zeichnung Fig. 5 nicht dargestellt.

Die Bewegung eines oder mehrerer, beispielsweise als Kugeln 40 oder Klappen 42 ausgeführter Strömungselemente 04 kann bei allen Ausgestaltungen pneumatisch mit Luft (Fig. 1, Fig. 2, Fig. 3) oder alternativ oder zusätzlich elektromagnetisch erfolgen (Fig. 4).

Bei der in Fig. 5 dargestellten Schaltung wird mit Hilfe unterschiedlicher Steuerblenden 62 das Einströmen der Druckluft bei den jeweiligen Kanälen der Schaltkugeln 40 ermöglicht oder eben verhindert. Hierzu befinden sich jeweils zwei Steuerleitungen 60 auf der gleichen Bahn. Durch die jeweiligen Steuerblenden 62 wird bei Beaufschlagung der Steuerleitungen 60 mit Druckluft nur eine der zwei Kugeln 40 bewegt. Zur Bewegung der zweiten Kugel 40 wird eine Steuerleitung 60 verwendet, welche leicht radial versetzt angeordnet ist und daher von einer anderen Steuerblende 62 geöffnet oder geschlossen werden kann.

So können mit vier Steuerleitungen 60 beide Schaltpositionen der Kugeln 40 gewählt werden.

Die in Fig. 5, Fig. 6 und Fig. 7 dargestellten Vorrichtungen 10 umfassen jeweils eine Zahl von Einrichtungen 01, welche der Anzahl der zu Ausbringungsorganen führenden ersten Leitungen 21 beziehungsweise zu solchen führenden Fenstern 23 (Fig. 5) entspricht.

Bei den durch gestrichelte Umrandungen andeutungsweise dargestellten Einrichtungen 01 der in Fig. 5 gezeigten Vorrichtung 10 nehmen die Strömungselemente 04 der beiden dargestellten Einrichtungen 01 unterschiedliche Schaltpositionen ein. Die Strömungselemente 04 können dabei nach Bedarf individuell geschaltet werden. Die Einrichtungen 01 der in Fig. 5 dargestellten Vorrichtung 10 umfassen Kugeln 40 als Strömungselemente 04.

Das Strömungselement 04 der durch gestrichelte Umrandung hervorgehobenen Einrichtung 01 der in Fig. 6 gezeigten Vorrichtung 10 nimmt eine Schaltposition ein, bei der die Strömung nicht der zu einem Ausbringungsorgan führenden ersten Leitung 21, sondern einer zu einem Sammelbehältnis führenden zweiten Leitung 22 zugeführt wird. Sämtliche Strömungselemente 04 der verbleibenden Einrichtungen 01 der in Fig. 6 gezeigten Vorrichtung 10 nehmen Schaltpositionen ein, bei denen die Körner umfassende Strömung den zu Ausbringungsorganen führenden ersten Leitungen 21 zugeführt wird. Hierdurch ist nur eine Leitung 21 abgeschaltet, beispielsweise um eine Fahrgasse freizuhalten. Die Einrichtungen 01 der in Fig. 6 dargestellten Vorrichtung 10 umfassen Klappen 42 als Strömungselemente 04.

Bei der in Fig. 7 dargestellten Vorrichtung 10 nehmen die Strömungselemente 04 sämtlicher ihrer Einrichtungen 01 die selbe Schaltposition ein, wie das Strömungselement 04 der exemplarisch durch gestrichelte Umrandung hervorgehobenen Einrichtung 01.

Sämtliche Strömungselemente 04 der Einrichtungen 01 der in Fig. 7 gezeigten Vorrichtung 10 nehmen damit Schaltpositionen ein, bei denen die Körner umfassende Strömung den zu Ausbringungsorganen führenden ersten Leitungen 21 zugeführt wird. Die Einrichtungen 01 der in Fig. 7 dargestellten Vorrichtung 10 umfassen Kugeln 40 als Strömungselemente 04.

Die Erfindung ist insbesondere im Bereich der Herstellung landwirtschaftlicher Maschinen und Apparate, vor allem Verteilmaschinen, wie etwa Sämaschinen, insbesondere für die Drill- oder Mulchsaat, und/oder Düngerverteilmaschinen sowie Verteilvorrichtungen für solche Verteilmaschinen gewerblich anwendbar.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichen

- 01: Einrichtung

- 03: Strömungsraum
- 04: Strömungselement
- 05: Gehäuse
- 06: Mittel

- 10: Vorrichtung
- 11: Verteiler

- 21: erste Leitung
- 22: zweite Leitung
- 23: Fenster
- 24: Fenster

- 30: Einlassöffnung
- 31: Auslassöffnung
- 32: Auslassöffnung

- 40: Kugel
- 41: Fortsatz
- 42: Klappe

- 60: Steuerleitung
- 61: Druckluft-Weiche
- 62: Steuerblende
- 63: Elektromagnet

- S: Pfeil (Strömung)
- F: Pfeil (Krafteinwirkung)

## Patentansprüche

1. Verfahren zur Lenkung einer körniges Gut umfassenden Strömung wahlweise durch mindestens eine erste Leitung (21) und bedarfsweise durch mindestens eine zweite Leitung (22), wobei:
- die Strömung in einen Strömungsraum (03) mündet, in dem ein Strömungselement (04) zumindest zum Teil beweglich beherbergt ist,
- wobei das Strömungselement (04) wenigstens zwei zumindest vom auf es einwirkenden Staudruck der Strömung unterstützte, stabile Schaltpositionen in dem Strömungsraum (03) einzunehmen in der Lage ist, zwischen denen es unter Überwindung zumindest des Staudrucks der Strömung hin und her beweglich ist, eine erste Schaltposition, in der es eine in die erste Leitung (21) mündende Auslassöffnung (31) blockiert und dadurch die erste Leitung (21) von der Strömung abschneidet, und eine zweite Schaltposition, in der es eine in die zweite Leitung (22) mündende Auslassöffnung (32) blockiert und dadurch die zweite Leitung (22) von der Strömung abschneidet,
wobei zum Hin- und Herschalten eine berührungslose Krafteinwirkung in einer von der Strömungsrichtung verschiedenen Richtung auf das Strömungselement (04) aufgebracht wird, die groß genug ist, um das Strömungselement (04) zu veranlassen, zunächst entgegen dem Staudruck der Strömung seine erste stabile Schaltposition über eine zwischen den stabilen Schaltpositionen befindliche instabile Zwischenposition hinweg zu verlassen, um schließlich zumindest vom Staudruck der Strömung wiederum gestützt eine von der ersten stabilen Schaltposition verschiedene zweite stabile Schaltposition einzunehmen; **dadurch gekennzeichnet, dass** die Krafteinwirkung auf das Strömungselement (04) durch einen Druckstoß erfolgt.

2. Verfahren nach Anspruch 1, wobei der Druckstoß in Richtung quer zur Strömungsrichtung und/oder quer zur durch den Staudruck in einer stabilen Lage ausgeübten Kraftrichtung auf das Strömungselement (04) erfolgt.

3. Verfahren nach Anspruch 1 oder 2, wobei als Krafteinwirkung oder während der Krafteinwirkung ein Druckstoß auf das Strömungselement (04) entgegen der Strömungsrichtung erfolgt.

4. Verfahren nach einem der voranstehenden Ansprüche, wobei eine erste Leitung (21) zu mindestens einem Ausbringungsorgan führt.

5. Einrichtung (01) zur Lenkung einer körniges Gut umfassenden Strömung wahlweise durch mindestens eine erste Leitung (21) und bedarfsweise durch mindestens eine zweite Leitung (22), mit einem von einem Gehäuse (05) umschlossenen Strömungsraum (03) mit einer Einlassöffnung (30) und mindestens zwei Auslassöffnungen (31, 32) sowie einem in dem Strömungsraum (03) zumindest zum Teil beweglich beherbergten Strömungselement (04), wobei zumindest an jede der Auslassöffnungen (31, 32) jeweils mindestens eine Leitung (21, 22) angeschlossen ist, wobei:
- das Strömungselement (04) zwischen einer der Anzahl der Auslassöffnungen (31, 32) entsprechenden Zahl von Schaltpositionen beweglich angeordnet ist,
- das Strömungselement (04) in jeder der Schaltpositionen die Mündung einer der Auslassöffnungen (31, 32) in den Strömungsraum (03) bedeckt,
- das Strömungselement (04) in den Schaltpositionen unter Einwirkung des auf es einwirkenden Staudrucks der durch die Einlassöffnung (30) in den Strömungsraum (03) einströmenden und durch die mindestens eine Auslassöffnung (31, 32) aus diesem wieder austretenden Strömung jeweils eine stabile Lage aufweist, und
- die Einrichtung (01) Mittel (06) zur berührungslosen Ausübung einer Krafteinwirkung auf das Strömungselement (04) in einer von der Strömungsrichtung verschiedenen Richtung umfasst;
**dadurch gekennzeichnet, dass** die Mittel (06) zur berührungslosen Ausübung einer Krafteinwirkung mindestens zwei in verschiedenen Schaltpositionen auf das Strömungselement (04) in Richtung einer Lösung aus dessen jeweiliger Schaltposition gerichtete, zur Ausübung der Krafteinwirkung mit einer Druckluftquelle in Verbindung bringbare Steuerleitungen (60) umfassen.

6. Einrichtung nach Anspruch 5, wobei die Mittel (06) zur berührungslosen Ausübung einer Krafteinwirkung mindestens zwei auf gegenüberliegenden Seiten zweier dazwischen befindlicher Schaltpositionen angeordnete und mit einer Stromquelle verbindbare Elektromagnete (63) umfassen.

7. Einrichtung nach Anspruch 5 oder 6, wobei eine Kugel (40) als Strömungselement (04) vorgesehen ist.

8. Einrichtung nach Anspruch 7, wobei die Kugel (40) einen entgegen der Strömungsrichtung abstehenden Fortsatz (41) aufweist.

9. Einrichtung nach Anspruch 5 oder 6, wobei eine oder mehrere Klappen (42) als Strömungselement (04) vorgesehen sind, wobei jede Klappe (42) zwischen den Mündungen von zwei Auslassöffnungen (31, 32) in den Strömungsraum (03) angeordnet ist, und die Anzahl der Klappen (42) dabei der Zahl der Auslassöffnungen (31, 32) abzüglich eins entspricht.

10. Einrichtung nach einem der Ansprüche 5 bis 9, wobei eine erste Leitung (21) zu mindestens einem Ausbringungsorgan führt.

11. Vorrichtung (10) zur Verteilung körnigen Guts auf eine veränderliche Anzahl von zu jeweils mindestens einem Ausbringungsorgan führenden Leitungen (21), mit einem in eine Mehrzahl von zu jeweils mindestens einem Ausbringungsorgan führenden Leitungen (21) mündenden Verteiler (11), wobei sie zumindest eine zwischen dem Verteiler (11) und einem oder mehreren an wenigstens eine von diesem abgehende Leitung (21) angeschlossenen Ausbringungsorganen angeordnete Einrichtung (01) nach einem der Ansprüche 5 bis 10 umfasst, wobei an mindestens eine Auslassöffnung (31) der Einrichtung wenigstens eine erste Leitung (21) angeschlossen ist, die zu mindestens einem Ausbringungsorgan führt, und an zumindest eine Auslassöffnung (32) wenigstens eine zweite Leitung (22) angeschlossen ist, die zu einem Sammel- und/oder Auffangbehältnis führt.

12. Vorrichtung nach Anspruch 11, wobei das Sammel- und/oder Auffangbehältnis mit einem körniges Gut vorhaltenden Reservoir kommuniziert, ein solches Reservoir umfasst, oder von einem solchen Reservoir umfasst ist.

## Claims

1. A method for guiding a flow containing granular material selectively through at least one first conduit (21) and, if needed, through at least one second conduit (22), wherein:
- the flow opens into a flow space (03) in which a flow element (04) is accommodated in such a way as to be at least partially movable,
- wherein the flow element (04) is able to assume at least two stable switch positions in the flow space (03), which are supported at least by the dynamic pressure of the flow acting on the flow element and between which switch positions the flow element is movable back and forth while overcoming at least the dynamic pressure of the flow, a first switch position in which it blocks an outlet opening (31) opening into the first conduit (21), and through this cuts the first conduit (21) off from the flow, and a second switch position in which it blocks an outlet opening (32) opening into the second conduit (22), and through this cuts the second conduit (22) off from the flow,
wherein in order to switch back and forth, a contactless force is applied on the flow element (04) in a direction different from the direction of flow, which is large enough to cause the flow element (04), initially against the dynamic pressure of the flow, to leave its first stable switch position via an unstable intermediate position located between the stable switch positions, in order to finally assume a second stable switch position that is different from the first stable switch position and supported again at least by the dynamic pressure of the flow;
**characterised in that** the force acting on the flow element (04) arises through a pressure surge.

2. The method according to claim 1, wherein the pressure surge arises in the direction transversely to the direction of flow and/or transversely to the direction of the force exerted on the flow element (04) through the dynamic pressure in a stable situation.

3. The method according to claim 1 or 2, wherein, as a force or during the action of force, a pressure surge takes place on the flow element (04) opposite to the direction of flow.

4. Method according to one of the preceding claims, wherein a first conduit (21) leads to at least one dispensing member.

5. A device (01) for guiding a flow containing granular material selectively through at least one first conduit (21) and, if needed, through at least one second conduit (22), with a flow space (03) enclosed by a housing (05), comprising an inlet opening (30) and at least two outlet openings (31, 32) as well as a flow element (04) accommodated in the flow space (03) in such a way as to be at least partially movable, wherein at least one conduit (21, 22) is connected to each of the outlet openings (31, 32), wherein:
- the flow element (04) is movably arranged between a number of switch positions corresponding to the number of outlet openings (31, 32),
- in each of the switch positions, the flow element (04) covers the mouth of one of the outlet openings (31, 32) into the flow space (03),
- the flow element (04) has respectively a stable position in the switch positions under the effect of the dynamic pressure of the flow flowing into the flow space (03) through the inlet opening (30) and out again through the at least one outlet opening (31, 32), and
- the device (01) comprises means (06) for contactless exertion of a force on the flow element (04) in a direction different from the direction of flow; **characterised in that**
the means (06) for contactless exertion of a force comprise at least two control lines (60) connectable to a compressed air source in order to exert the force directed, in different switch positions, onto the flow element (04) in the direction of a separation from its respective switch position.

6. The device according to claim 5, wherein the means (06) for contactless exertion of a force comprise at least two solenoids (63), arranged on opposite sides of two switch positions located therebetween and connectable to a power source.

7. The device according to claim 5 or 6, wherein a ball (40) is provided as the flow element (04).

8. The device according to claim 7, wherein the ball (40) has an extension (41) protruding counter to the direction of flow.

9. The device according to claim 5 or 6, wherein one or more flaps (42) are provided as flow element (04), wherein each flap (42) is arranged between the mouths of two outlet openings (31, 32) into the flow space (03), and the number of flaps (42) thereby corresponds to the number of outlet openings (31, 32) minus one.

10. The device according to one of the claims 5 to 9, wherein a first conduit (21) leads to at least one dispensing member.

11. An arrangement (10) for the distribution of granular material into a variable number of conduits (21) each leading to at least one dispensing member, with a distributor (11) opening into a plurality of conduits (21) each leading to at least one dispensing member, wherein said arrangement comprises at least one device (01) according to one of claims 5 to 10 arranged between the distributor (11) and one or more dispensing members connected to at least one of these outgoing conduits (21), wherein at least one first conduit (21) is connected to at least one outlet opening (31) of the device, which leads to at least one dispensing member, and at least one second conduit (22), which leads to a collection container and/or containment vessel, is connected to at least one outlet opening (32).

12. The arrangement according to claim 11, wherein the collection container and/or containment vessel communicates with a reservoir containing granular material, includes such a reservoir, or is included in such a reservoir.

## Revendications

1. Procédé permettant de dévier un écoulement comprenant un produit en grains sélectivement par au moins une première conduite (21) et si besoin au moins une deuxième conduite (22),
- l'écoulement débouchant dans une chambre d'écoulement (03) dans laquelle un élément d'écoulement (04) est logé au moins en partie de manière mobile,
- l'élément d'écoulement (04) pouvant adopter au moins deux positions de commutation stables dans la chambre d'écoulement (03), lesquelles positions étant favorisées par la pression dynamique de l'écoulement exercée sur l'élément d'écoulement, positions entre lesquelles ledit élément d'écoulement peut se déplacer en va-et-vient en surmontant au moins la pression dynamique de l'écoulement, de manière pour la première position de commutation à bloquer un orifice de sortie (31) débouchant dans la première conduite (21) et à couper ainsi la première conduite (21) de l'écoulement et de manière pour la deuxième position de commutation à bloquer un orifice de sortie (32) débouchant dans la seconde conduite (22) et à couper ainsi la seconde conduite (22) de l'écoulement,
l'action d'une force sans contact étant appliquée pour assurer une commutation en va-et-vient sur l'élément d'écoulement (04) dans une direction différente de la direction d'écoulement, la force étant suffisante pour forcer l'élément d'écoulement (04) à quitter sa première position de commutation stable, initialement contre la pression dynamique de l'écoulement, à passer dans une position intermédiaire instable se trouvant entre les positions de commutation stables, afin finalement d'adopter une seconde position de commutation stable différente de la première position de commutation stable de nouveau supporté au moins par la pression dynamique de l'écoulement ;
**caractérisé en ce que**
l'action de la force sur l'élément d'écoulement (04) est appliquée par un coup de bélier.

2. Procédé selon la revendication 1, le coup de bélier s'exerçant sur l'élément d'écoulement (04) dans le sens transversal au sens de l'écoulement et/ou transversal au sens de la force exercée par la pression dynamique dans une position stable.

3. Procédé selon la revendication 1 ou 2, un coup de bélier étant appliqué comme action de la force ou pendant l'action de la force sur l'élément d'écoulement (04) à contre sens du sens de l'écoulement.

4. Procédé selon une des revendications qui précèdent, une première conduite (21) menant au moins à un organe d'épandage.

5. Équipement (01) permettant de dévier un écoulement comprenant un produit en grains sélectivement par au moins une première conduite (21) et si besoin au moins une deuxième conduite (22), avec une chambre d'écoulement (03) entourée d'un carter (05) avec un orifice d'entrée (30) et au moins deux orifices de sortie (31, 32) ainsi qu'avec un élément d'écoulement (04) logé dans la chambre d'écoulement (03) au moins en partie de manière mobile, au moins une conduite (21, 22) étant respectivement raccordée à chacun des orifices de sortie (31, 32),
- l'élément d'écoulement (04) étant disposé de manière mobile entre un nombre de positions de commutation correspondant au nombre des orifices de sortie (31, 32),
- l'élément d'écoulement (04) couvrant dans chacune des positions de commutation l'embouchure d'un des orifices de sortie (31, 32) dans la chambre d'écoulement (03),
- l'élément d'écoulement (04) présentant dans les positions de commutation respectivement une position stable sous l'action de la pression dynamique exercée sur lui par l'écoulement affluant par l'orifice d'entrée (30) dans la chambre d'écoulement (03) et en sortant par au moins un orifice de sortie (31, 32) et
- l'équipement (01) comprenant des moyens (06) pour exercer sans contact l'action d'une force sur l'élément d'écoulement (04) dans un sens différent du sens de l'écoulement ;
**caractérisé en ce que**
les moyens (06) pour exercer sans contact l'action d'une force sur l'élément d'écoulement (04) comprennent au moins deux lignes de commande (60) pouvant être mises en liaison avec une source d'air comprimé pour appliquer l'action de la force dans différentes positions de commutation orientées dans le sens d'un relâchement de la position de commutation respective.

6. Équipement selon la revendication 5, les moyens (06) pour exercer sans contact l'action d'une force comprenant au moins deux électroaimants (63) disposés sur des côtés opposés de deux positions de commutation se trouvant entre et pouvant être reliés avec une source électrique.

7. Équipement selon la revendication 5 ou 6, une boule (40) étant prévue comme élément d'écoulement (04).

8. Équipement selon la revendication 7, la boule (40) présentant un prolongement (41) en porte-à-faux dans le sens opposé au sens de l'écoulement.

9. Équipement selon la revendication 5 ou 6, un ou plusieurs clapets (42) étant prévus comme élément d'écoulement (04), chaque clapet (42) étant disposé entre les embouchures de deux orifices de sortie (31, 32) dans la chambre d'écoulement (03) et le nombre des clapets (42) correspondant ce faisant au nombre des orifices de sortie (31, 32) moins un.

10. Équipement selon une des revendications 5 à 9, une première conduite (21) conduisant à au moins un organe d'épandage.

11. Dispositif (10) de distribution d'un produit en grains sur un nombre variable de conduites (21) menant respectivement à au moins un organe d'épandage, avec un distributeur (11) débouchant dans plusieurs conduites (21) menant respectivement à au moins un organe d'épandage, ledit dispositif comprenant au moins un équipement (01) selon une des revendications 5 à 10 disposé entre le distributeur (11) et un ou plusieurs organes d'épandage raccordés à au moins une conduite (21) partant de celui-ci, au moins une première conduite (21) étant raccordée à au moins un orifice de sortie (31) de l'équipement, ladite conduite menant à au moins un organe d'épandage et au moins une seconde conduite (22) étant raccordée à au moins un orifice de sortie (32) menant à un réceptacle de collecte et/ou de récupération.

12. Dispositif selon la revendication 11, le réceptacle de collecte et/ou de récupération communiquant avec un réservoir contenant un produit en grains, comprenant un tel réservoir ou étant compris par un tel réservoir.
